# EUROPÄISCHE PATENTSCHRIFT

(11) **EP 2 173 502 B1**
(45) Veröffentlichungstag und Bekanntmachung des Hinweises auf die Patenterteilung: **29.12.2010**
(21) Anmeldenummer: 08757280.6
(22) Anmeldetag: 25.06.2008
(51) Int. Cl.: B21D 51/26, B65D 83/14, B23K 26/22

(54) **DOSENKÖRPER UND VERFAHREN SOWIE VORRICHTUNG ZUM HERSTELLEN DESSELBEN**
CAN BODY AND PROCESS AND DEVICE FOR PRODUCING IT
CORPS DE BOÎTIER ET PROCÉDÉ ET DISPOSITIF POUR SA FABRICATION

(30) Priorität: 27.07.2007 CH 12022007
(43) Veröffentlichungstag der Anmeldung: 14.04.2010
(73) Patentinhaber: CREBOCAN AG, 9606 Bütschwil (CH)
(72) Erfinder: BOLTSHAUSER, Werner, CH-9606 Bütschwil (CH)
(74) Vertreter: Stocker, Kurt
(86) Internationale Anmeldenummer: PCT/CH2008/000287
(87) Internationale Veröffentlichungsnummer: WO 2009/015498

(56) Entgegenhaltungen:
- EP-A- 0 127 212
- EP-A- 0 168 000
- EP-A- 0 666 124
- WO-A-2005/000498
- WO-A-2005/068127
- DE-A1- 3 915 765
- DE-A1- 19 815 638
- GB-A- 843 371
- US-A- 4 095 544
- US-A- 4 111 339
- US-A- 4 753 364
- US-A- 4 832 236

## Beschreibung

Die Erfindung bezieht sich auf einen Dosenkörper nach dem Oberbegriff des Anspruches 1 auf ein Verfahren zum Herstellen von Dosenkörpern nach dem Oberbegriff des Anspruches 9 und auf eine Vorrichtung zum Herstellen von Dosenkörpern nach dem Oberbegriff des Anspruches 15.

Aerosol-Dosenkörper sind ein- oder mehrteilig ausgebildet. Bei einteiligen Aerosol-Aludosen wird ein zylindrischer Dosenkörper mittels Kaltfliesspressen bereitgestellt. Anschliessend wird am offenen Ende mittels Stauch-Necking ein Ventilsitz ausgebildet. Dieses Herstellungsverfahren ist aufgrund der für die vielen Bearbeitungsschritte benötigten Anlage und dem Wasser- sowie Energiebedarf für Reinigung und Trocknung sehr aufwendig. Die US 4 095 544 und die EP 0 666 124 A1 beschreiben das Herstellen nahtfreier Stahldosen. Dabei wird der zylindrische Dosenkörper mittels Stanzen, Pressen und Abstrecken aus einem mit Zinn bzw. mit Kunststoff beschichteten Stahlblech hergestellt. Es hat sich gezeigt, dass beim Ausbilden eines verengten Dosenhalses enorme Probleme auftreten, weil die Materialstruktur durch das Abstrecken verändert bzw. verhärtet ist.

Stark verbreitet sind auch Dosenkörper aus Stahlblech, bei denen der Mantel eine Längs-Schweissnaht aufweist. Der Boden und der obere Abschluss sind über Falzverbindungen am Dosenmantel befestigt. Bei Falzverbindungen können Dichtungsprobleme auftreten, die etwa mit Dichtungsringen reduziert werden. Bei den gängigen äusserst dünnwandigen Dosen ergeben sich mit stirnseitig angeordneten Dichtungen Probleme.

Aus der US 4 753 364 ist eine Aerosoldose bekannt, deren Dosenkörper aus einem flachen rechteckigen Blech hergestellt wird. Das Blech wird in die Form eines Zylindermantels mit kreisförmigem Querschnitt umgeformt. Die beiden zusammengeführten seitlichen Berandungen werden stumpf verschweisst, so dass ein zylindrischer Dosenmantel mit im Wesentlichen konstanter Wanddicke entsteht. Nach dem Aufsetzen des Dosenmantels auf einen Dorn mit einem domförmigen Endbereich, wird der Dosenmantel in mehreren Verengungsschritten an den domförmigen Endbereich angedrückt. Vom domförmigen Verengungsbereich führt ein zylindrischer Abschnitt mit kleinerem Durchmesser zum freien Ende des umgeformten Dosenmantels.

Am verengten Ende wird mit einem Schneidschritt eine präzise Berandung ausgebildet. Anschliessend wird der zylindrische Abschnitt mit kleinerem Durchmesser mit einer Einwärts-Bördelung zu einem Ventilsitz geformt. Die Bördelung wird so ausgebildet, dass die geschnittene Stirnseite im Inneren der Bördelung liegt. Die Verbindungsschalen-Bördelung eines auf den Ventilsitz aufgesetzten Ventilteils kommt somit nicht mit der geschnittenen Stirnseite des Dosenmantels und auch nicht mit dem Hohlraum der Bördelung in Kontakt. Das Festsetzen der Verbindungsschale an der Einwärts-Bördelung entspricht dem verbreiteten Festsetzen der Verbindungsschale an einer Auswärts-Bördelung, wobei aber das Produkt im Doseninnern zur geschnittenen Stirnseite im Hohlraum des Ventilsitzes gelangen kann, was bei vielen Produkten nicht erwünscht ist.

Aus der WO05/000498 ist eine Lösung bekannt, bei der an einem mit einer gestossenen Laser-Längsnaht geschlossenen Dosenmantel an der unteren Stirnseite ein Dosenboden mit einer Lasernaht befestigt wird. Bei der oberen Stirnseite wird eine Verengung ausgebildet. Dazu wird von aussen eine Formrolle gegen den drehenden Dosenmantel gedrückt. Im Innern des Dosenmantels ist eine Stützkante angeordnet, die beim Verengen mit der Formrolle zusammenwirkt und in Richtung der oberen Stirnseite bewegt wird. Am verengten Ende wird ein Abschlusselement mit einem Ventilsitz fest geschweisst. Gegebenenfalls wird das obere Ende des Dosenmantels mittels Stauch-Necking oder Spin-Flow-Necking verengt, wobei diese Verengung bis zur Ausbildung des Ventilsitzes durchgeführt werden kann. Der Ventilsitz wird vom nach aussen umgeformten Dosenende gebildet, wobei der Ventilsitz in einer Schnittebene, welche die Dosenlängsachse umfasst, im Wesentlichen kreisförmig ist. Das freie Ende erstreckt sich von innen nach aussen und von aussen gegen die Aussenseite des verengten Dosenmantels zurück. Es handelt sich beim Ventilsitz um einen so genannten Auswärts-Curl, bzw. um eine Auswärts-Randbördelung.

Aus der WO05/068127 ist eine Lösung bekannt, bei der ein Dosenmantel mit einer gestossenen Laser-Längsnaht zur Formgebung radial nach aussen an eine innenform gepresst wird. An der unteren Stirnseite des Dosenmantels wird ein Dosenboden fest geschweisst. An der oberen Stirnseite wird mit einer Lasernaht ein Abschlusselement mit Ventilsitz angeordnet. Gegebenenfalls wird anstelle des oberen Abschlusselementes am oberen Ende des Dosenmantels ein Verengungs-Verfahren, wie etwa Stauch-Necking oder Spin-Flow-Necking durchgeführt. Diese Verengung kann bis zur Ausbildung des Ventilsitzes durchgeführt werden. Die dargestellten Ausführungsbeispiele zeigen Auswärts-Curls, bzw. Auswärts-Randbördelungen.

Beim Festsetzen von Ventilen an Aerosol-Dosenkörpern wird am Ventilsitz eine Verbindungsschale mit dem Ventil fest gecrimpt. Wenn der Ventilsitz mittels verengen und umformen des Dosenmantels ausgebildet wird, so können sich am Ventilsitz Haarrisse bilden, welche nach dem Festcrimpen der Verbindungsschale zu unerwünschten Mikroleckagen führen können.

US 4 832 236 zeigt eine Dichtungsanordnung zwischen dem Ventilsitz, bzw. der Auswärts-Randbördelung des Dosenkörpers und der Ventil-Verbindungsschale bzw. der Verbindungsschalen-Bördelung des Ventilteils. Das im zentralen Kontaktbereich eingesetzte Dichtungsmaterial muss auf die Verbindungsschale aufgebracht werden und entlang des gesamten Umfangs eine gewünschte Mächtigkeit aufweisen. Zudem muss die Verbindungsschale beim Crimpen genau richtig verformt werden, damit das Dichtungsmaterial nicht beschädigt und die gewünschte Dichtwirkung erzielt wird. An der Verbindungsschale muss eine definierte lokale Radiusänderung ausgebildet sein. Die Herstellung der mit Dichtungsmaterial beschichteten Ventilschalen ist aufwändig. Wenn Dichtungen eingelegt werden, so ist das richtige Einsetzen des Ventils schwieriger.

DE 198 15 638 zeigt eine Dichtungsanordnung für unter Druck stehende Abgabebehälter. Eine erste Dichtung ist zwischen einer Ventilschale und dem Dosenbehälter angeordnet. Eine zweite Dichtung befindet sich zwischen dem unter der Ventilschale liegenden Ventilkörper und dem Dosenbehälter. Diese Lösung ist nicht geeignet für Standard-Aerosoldosen, weil für die erste Dichtung kein Aufnahmebereich vorgesehen ist. Zudem ist der Aufbau des Ventils äusserst kompliziert.

Der vorliegenden Erfindung liegt die Aufgabe zugrunde, eine Lösung zu finden, mit der dichte Dosen einfach und kostengünstig hergestellt werden können. Insbesondere soll das Produkt im Doseninnern nicht mit der metallischen Schicht des Dosenkörpers in Kontakt kommen.

Diese Aufgabe wird durch die Merkmale des Anspruches 1,, des Anspruches 9 und des Anspruches 15 gelöst. Die abhängigen Ansprüche beschreiben bevorzugte bzw. alternative Ausführungsformen.

Beim Lösen der Aufgabe wurde erkannt, dass elastische Dichtungen zwischen Ventilsitz und Ventil-Verbindungsschale nach dem Festcrimpen ein minimales Spiel zwischen dem Ventilsitz und der Verbindungsschale des Ventils zulassen. Der Innendruck drückt die Verbindungsschale vom Doseninnern weg, was tendenziell zu einer Vergrösserung des Dichtungsbereiches zwischen der Auswärts-Randbördelung des Dosenkörpers und der Verbindungsschalen-Bördelung des Ventilteils führt. Wenn der Bereich der Verbindungsschale, der aufgrund des Innendruckes gegen die Auswärts-Randbördelung des Dosenkörpers gedrückt wird, nicht dicht an der Auswärts-Randbördelung anliegt, so besteht die Gefahr einer Leckage. Diese Gefahr der Leckage ergibt sich dadurch, dass nach dem Festcrimpen der Verbindungsschalen-Bördelung an der Randbördelung des Dosenkörpers ein innerer Anschlag zwischen der Verbindungsschale und dem Dosenkörper gebildet ist, welche Teile nicht elastisch sind und somit gegebenenfalls nicht entlang des gesamten Umfangs spaltfrei aneinander anliegen.

Gemäss der vorliegenden Erfindung wird am Dosenkörper beim freien Ende eines verengten Dosenhalses eine Einwärts-Randbördelung mit einer ringförmigen Dichtung bzw. einem Dichtungsring als Ventilsitz ausgebildet. Die Einwärts-Randbördelung hält die Dichtung bzw. den Dichtungsring ohne ihn zu umschliessen, so dass er vom Inneren des Dosenmantels her zugänglich ist. Nach dem Festcrimpen eines Ventilteils ist ein innerer Anschlag zwischen dem Dichtungsring und der Verbindungsschalen-Bördelung ausgebildet. Weil der Dichtungsring elastisch ist, liegt die Verbindungsschalen-Bördelung entlang des gesamten Umfangs spaltfrei am Dichtungsring an. Der Dichtungsring liegt auch dicht an einer inneren Kontaktfläche der Einwärts-Randbördelung des Dosenkörpers an.

Weil der Innendruck der Dose über die Verbindungsschale und auch direkt auf den Dichtungsring wirkt, wird die Gefahr einer Leckage durch den Innendruck verkleinert. Der Innendruck erhöht die Anpresskraft zwischen der inneren Kontaktfläche der Verbindungsschale und dem Dichtungsring, sowie zwischen dem Dichtungsring und der Einwärts-Randbördelung des Dosenkörpers.

Gegebenenfalls wird durch eine Wärmebehandlung und/oder eine Beschichtung mit einem Siegelmaterial eine feste Verbindung zwischen den dicht aneinander anliegenden Kontaktflächen des Dichtungsrings und der Innenbeschichtungen des Dosenmantels sowie der Verbindungsschale bereitgestellt. Gegebenenfalls schmilzt eine oberflächliche Kontaktschicht des Dichtungsringes und verbindet sich dabei mit der anliegenden Kontaktfläche. Wenn eine Siegelbeschichtung eingesetzt wird, so ist es vorteilhaft, wenn diese am Dichtungsring angeordnet ist. Um die Siegelverbindung im gewünschten Augenblick, nämlich nach der richtigen Zusammenstellung der Komponenten, ausbilden zu können, wird vorzugsweise ein heiss siegelndes Material verwendet.

Weil nun der Dichtungsring des Ventilsitzes die Dichtungsfunktion übernimmt, können Verbindungsschalen ohne Dichtungsmaterial verwendet werden. Die Einwärts-Randbördelung muss lediglich den Dichtungsring halten, aber nicht umschliessen. Sie wird in einer Schnittebene, welche die Dosenlängsachse umfasst, c-förmig gegen das Innere des Dosenkörpers hin offen ausgebildet, so dass der Dichtungsring vom Inneren des Dosenkörpers her entlang seines ganzen Umfangs zugänglich ist. Der Umformaufwand für die Einwärts-Randbördelung ist im Vergleich zu den geschlossenen Randbördelungen kleiner.

Der Dosenhals kann als separater Teil hergestellt und über eine Schweiss- oder Falzverbindung mit dem Dosenmantel verbunden werden. Vorzugsweise wird der Dosenhals aber durch ein Verengungsverfahren, insbesondere Spin-Flow-Necking, an einer Stirnseite des Dosenmantels ausgebildet.

Weil bei kleinen Dosendurchmessern die Verengung im Halsbereich klein ist, kann diese mit kleinem Aufwand durch Verengungsverfahren erzielt werden. Bei grossen Dosendurchmessern muss die Verengung auch bis zum gängigen Ventildurchmesser durchgeführt werden. Um auf die damit verbundene starke Verengung des Halsbereichs verzichten zu können, ist es häufig zweckmässig einen separaten Teil mit Einwärts-Randbördelung und Dichtung am Dosenmantel zu befestigen.

Es versteht sich von selbst, dass die Dichtung auch mit Haft- oder Klebekräften in der Einwärts-Randbördelung gehalten werden kann. Zudem ist es bei Ausführungen mit einem Ventilsitz, der über eine Schweiss- oder Falzverbindung mit dem Dosenmantel verbunden ist, vorteilhaft wenn die Dichtung mitsamt der Innenbeschichtung des Teils mit dem Ventilsitz im wesentlichen einteilig ausgebildet ist. Dazu wird etwa die Dichtung und die Innenbeschichtung mit einem Spritzgussschritt innen an diesem Teil angebracht.

Gemäss einer bevorzugten Ausführungsform umfassen der Dosenmantel und die Verbindungsschale des Ventilteils eine Schicht aus Metall, insbesondere Eisen- bzw. Stahlblech, und auf den Innenseiten des Dosenmantels und der Verbindungsschale eine Kunststoffschicht. Die Kunststoffschichten des Dosenmantels und der Verbindungsschale erstrecken sich bis an oder unter den Dichtungsring, so dass vom Doseninnern gesehen auch im Verbindungsbereich zwischen Dosenmantel und Verbindungsschale eine durchgehende Innenbeschichtung gewährleistet ist. Eine Verbindung vom Dichtungsring zu den Innenbeschichtungen des Dosenmantels und der Verbindungsschale ist bei den Kontaktfächen mit kleinem Aufwand zu erzielen. Gegebenenfalls schmilzt eine oberflächliche Kontaktschicht des Dichtungsringes und verbindet sich dabei mit den Innenbeschichtungen. Wenn an den anliegenden Kontaktflächen auch ein schmelzfähiges Kunststoffmaterial angeordnet ist, so verschmelzen die aneinander anliegenden Kontaktflächen aufgrund der Wärmebehandlung. Wenn eine Siegelbeschichtung eingesetzt wird, so ist es vorteilhaft, wenn diese am Dichtungsring angeordnet ist. Um die Siegelverbindung im gewünschten Augenblick, nämlich nach der richtigen Zusammenstellung der Komponenten, ausbilden zu können, wird vorzugsweise ein heiss siegelndes Material verwendet.

Vorteilhaft ist auch eine Ausführungsform bei der zudem ein Dekor in der Form einer zu einem Mantel geschlossenen Folie aussen am Dosenmantel angeordnet ist.

Besonders vorteilhaft ist das Anordnen einer Innen- und/oder einer Aussenfolie am geschlossenen Zylindermantel aus Metallblech mit einem Pressdorn und einer Innenform. Um die Lagen des Dosenmantels mit kleinem Aufwand zusammenzubringen wird das Zusammenbringen mit einem zylindrischen Pressdorn und einer zylindrischen Innenform durchgeführt. Dabei wird die Innenfolie zu einem Zylindermantel geschlossen und auf den Pressdorn aufgesetzt, so dass sie diesen eng umschliesst. Anschliessend wird der Zylindermantel aus Metallblech aufgesetzt, welcher nun die Innenfolie umschliesst. Zuletzt wird die Aussenfolie zu einem Zylindermantel geschlossen und aussen auf den Zylindermantel aus Metallblech aufgesetzt, so dass sie diesen umschliesst. Es versteht sich von selbst, dass gegebenenfalls auch nur die Innenfolie oder nur die Aussenfolie eingesetzt werden kann.

Der Pressdorn mit den daran angeordneten Schichten des Dosenmantels wird nun im Innern der zylindrischen Innenform radial nach aussen ausgedehnt. Vorzugsweise wird ein elastischer Pressdorn verwendet, der mittels eines in das Innere des Pressdornes eingebrachten Druckfluids ausgedehnt wird. Um ein Pressen von der Mitte gegen die beiden Stirnseiten hin zu erzielen, kann ein fassförmiger Pressdorn eingesetzt werden, der beim Druckaufbau zuerst im mittleren Bereich presst. Bei der Pressung an die Innenform wird der Umfang aller Schichten des Dosenmantels etwas erhöht. Um ein dauerhaftes Haften der Folien an der metallischen Schicht zu gewährleisten werden Folien mit einer der metallischen Schicht zugewandten Siegelschicht verwendet. Bei einer Heisssiegelschicht wird die gewünschte Siegelung dadurch erreicht, dass den Schichten des Dosenmantels Wärme zugeführt wird, insbesondere als Kontaktwärme von der Innenform gegebenenfalls aber induktiv, so dass die nötige Siegeltemperatur während einer benötigten Zeit gewährleistet ist.

Die mittels Siegelverbindungen zusammengestellten Schichten des zylindrischen Dosenmantel haften derart gut aneinander, dass mit einem Verengungsverfahren an einem freien Ende des zylindrischen Dosenmantels problemlos ein Dosenhals und eine Einwärts-Bördelung ausgebildet werden können. Die Innen- und die Aussenschicht werden dabei nicht beschädigt, sondern lediglich mit der metallischen Schicht zusammen umgeformt. Der Dosenhals zusammen mit einem verengten zylindrischen Endbereich wird beispielsweise mittels Spin-Flow-Necking ausgebildet. Es versteht sich von selbst, dass auch ein anderes, aus dem Stand der Technik bekanntes Verengungsverfahren möglich ist.

Um einen Dichtungsring am freien Ende eines Dosenhalses positionieren zu können, wird am verengten zylindrischen Endbereich ein innerer Sitz bzw. eine ringförmige Anschlagsfläche gebildet bis zu dem bzw. der ein Dichtungsring eingeführt werden kann. Die ringförmige Anschlagsfläche kann mit einem Verengungsschritt unterhalb der Anschlagsfläche oder mittels Aufweiten vom freien Ende bis zur Anschlagsfläche erzielt werden. Nach dem Einlegen des Dichtungsringes muss lediglich das freie Ende des Dosenhalses soweit radial nach innen um den Dichtungsring umgeformt werden, so dass der Dichtungsring am Dosenmantel in einer festen Position gehalten ist. Die Einwärts-Bördelung bildet zusammen mit dem eingesetzten Dichtungsring den Ventilsitz.

Zum Befestigen eines an einer Stirnseite der Dosenwand angeordneten Abschlussteils sind aus dem Stande der Technik Lösungen bekannt, bei denen mit einer Laser-Schweissnaht eine dichte ringförmig geschlossene Schweissnaht erzeugt wird. Es hat sich gezeigt, dass bei solchen durchgehenden Laser-Schweissnähten die aneinander anliegenden Kontaktbereiche der beiden miteinander zu verbindenden Teile keine Verschmutzungen und keine Beschichtungen haben sollten. Sonst besteht die Gefahr, dass Anteile der Verschmutzungen oder Beschichtungen aufgrund der im Nahtbereich entstehenden grossen Hitze explosionsartig in den Gaszustand übergehen und dabei in der Naht Unterbrüche und somit undichte Stellen erzeugen. Zum Überwinden dieses Nachteils stellt sich für beliebige Dosen die Aufgabe, eine Verbindung zu finden, bei der von kleinen Verunreinigungen oder von Beschichtungen keine Störungen der Verbindung ausgehen.

Beim Lösen dieser Aufgabe wurde in einem ersten Schritt erkannt, dass die metallische Schicht des Dosenmantels, die metallische Schicht des Abschlussteils und die Laser-Verbindung zwischen diesen Schichten nur die Stabilität der Dose gewährleisten müssen. Die Dichtheit kann durch eine zusammenhängende Innenbeschichtung bzw. Kunststoffmaterial bei den Laser-Verbindungen erzielt werden, wobei das Kunststoffmaterial dicht mit den Innenbeschichtungen der Teile verbunden wird.

In einem zweiten Schritt wurde erkannt, dass eine Laser-Verbindung mit vielen Unterbrüchen entlang der Verbindungslinie, bzw. mit einer Vielzahl von eng begrenzten Bereichen, in denen der Laserstrahl die beiden metallischen Schichten miteinander verschmolzen hat, weniger Wärme einbringt und die Gefahr von explosionsartigen Gasentwicklungen stark verkleinert ist.

Dadurch ergibt sich eine Lösung mit einer Vielzahl von eng begrenzten metallischen Verbindungspunkten und einem dichtenden Kunststoffmaterial. Sie kann bei allen Dosenmänteln und Abschlusselementen mit einer metallischen Schicht vorteilhaft eingesetzt werden und ist somit nicht auf Aerosol-Dosen und natürlich auch nicht auf spezielle Aerosol-Dosen mit einer Einwärts-Randbördelung eingeschränkt.

Ein weiterer Vorteil einer solchen kreisförmigen Laser-Verbindung mit einer Reihe von eng begrenzten Verbindungsbereichen besteht darin, dass sie mittels einer Laser-Scannervorrichtung durchgeführt werden kann. Das heisst der Laserstrahl wird beispielsweise über Spiegelbewegungen entlang der Verbindungslinie geführt, wobei der Laser abwechselnd durchgelassen oder unterbrochen wird und entsprechend Verbindungen und Unterbrüche entstehen. Aufgrund der Scanmöglichkeit kann auf das Drehen der Dose an der Austrittsstelle des Lasers vorbei verzichtet werden. Auch muss der Laser-Austrittskopf nicht entlang der Verbindungslinie bewegt werden.

Wenn der Dosenhals bzw. der Ventilsitz einer Aerosoldose als separater Teil hergestellt und dann mit einem verengten Dosenmantel verbunden wird, so wird gemäss einer bevorzugten Ausführungsform die Schweissverbindung mit in Umgangsrichtung unterbrochenen Schweissbereichen insbesondere mit punktförmigen Schweissbereichen ausgeführt.

Eine solche unterbrochene Schweissverbindung kann auch zum Befestigen des Dosenbodens am Dosenmantel vorteilhaft eingesetzt werden. Der Dosenboden kann vom Doseninneren her an einen verengten Endbereich des Dosenmantels gepresst und dann mit einer unterbrochenen Laser-Verbindung am verengten Bereich etwas überlappend festgesetzt werden. Wenn nun beispielsweise am vom Dosenboden abgewandten Ende des Dosenmantels kein Zugang besteht, um einen Dosenboden in das Innere des Dosenmantels und dann zum gewünschten Befestigungsbereich zu bringen, so gibt es eine Möglichkeit um einen Dosenboden direkt bei seinem Befestigungsbereich durch die Verengung ins Innere des Dosenmantels zu bringen.

Weil der Radius des Dosenbodens grösser ist als der Radius der Öffnung beim verengten Befestigungsbereich des Dosenbodens, wird der runde Querschnitt des Dosenmantels beim Befestigungsbereich des Dosenbodens mit einem kleinen Druck, bzw. mittels Quetschen, in einen ovalen freien Querschnitt umgeformt. Dabei vergrössert sich der Öffnungsquerschnitt in einer ersten Richtung und verkleinert sich in der senkrecht dazu stehenden zweiten Richtung. Wenn nun der Dosenboden zur Ebene der ovalen Öffnung gekippt wird, so kann er ins Innere des Dosenmantels eingeführt und nach dem Einführen und Zurückkippen von innen an die Verengung angepresst werden. Im Überlappungsbereich kann der Dosenboden mit einer Laser-Verbindung mit Unterbrüchen am Dosenmantel befestigt werden. Mit ring- oder scheibenförmigem Kunststoffmaterial innen entlang der Laser-Verbindung kann eine durchgehende und dichte Innenbeschichtung erzielt werden.

Bei Längsnähten führt die mit der Nahtbildung mitfliessende Wärmespitze beim Materialende zu einem unerwünschten Ausfransen, wo sie in Längsrichtung nicht mehr weiter fliessen kann. Dieses Problem tritt nicht auf wenn lange kontinuierlich ausgebildete Längsnähte gebildet werden und die Dosenmäntel vom entstehenden Rohr abgetrennt werden. Es hat sich nun gezeigt, dass das Problem beim Herstellen von Dosenmänteln aus Mantelzuschnitten bzw. Tafeln auch gelöst werden kann, indem anstelle einer durchgehenden Lasernaht eine Laser-Verbindung mit vielen Unterbrüchen entlang der Verbindungslinie ausgebildet wird. Die Unterbrüche verhindern das Mitfliessen einer Wärmemenge und daher sind Wärme-Ausbreitungsprobleme am Ende einer Verbindung, bzw. eines Mantelzuschnitts ausgeschlossen. Eine solche Dosenmantel-Längsverbindung umfasst eine Vielzahl von eng begrenzten Bereichen, in denen der Laserstrahl die beiden überlappenden metallischen Schichten miteinander verschmolzen hat. Wenn das Material des Dosenmantels innen beschichtet ist und eine durchgehende Innenbeschichtung des Dosenmantel gewünscht ist, so wird im Doseninnern entlang der Längsnaht Kunststoffmaterial angeordnet und dieses mit der Innenbeschichtung auf beiden Seiten der Naht dicht verbunden.

Gemäss einer weiteren bevorzugten Lösung wird der Dosenmantel mit einem ausgebildeten Ventilsitz durch einen zweiten radial aufweitenden Pressschritt an einer zweiten Innenform geformt, wobei die zweite Innenform vorzugsweise einer gewünschten Endform des Dosenmantels entspricht. Die Innenform kann beliebige von der Zylinderform abweichende Formen und Dekorstrukturen aufweisen. Dabei wird der Ventilsitz und über diesen der Dosenmantel beim Pressen in die Innenform gehalten. Der Ventilsitz wird nicht aufgeweitet. Durch das Halten des Dosenmantels am Ventilsitz ist eine definierte Lage des Dosenmantels relativ zur zweiten Innenform gewährleistet. Zum Pressen wird ein elastischer mit Druckfluid beaufschlagbarer Pressdorn in den Dosenmantel eingeführt.

Beim Formen in der zweiten Innenform kann beim freien Ende des Dosenmantels, das vom Ventilsitz abgewandt ist, eine Form ausgebildet werden, die dem Anschlussbereich eines Dosenbodens entspricht. Der Dosenboden wird anschliessend mit einer Laser-Schweissnaht am Dosenmantel befestigt.

Gemäss einer weiteren bevorzugten Lösung wird gegebenenfalls das dem Dosenboden zugeordnete freie Ende des Dosenmantels erst nach dem Einführen des Dosenbodens an dessen Aussenform angelegt. Dieses Vorgehen ist bei allen Dosen möglich, bei deren Herstellung ein Dosenmantel mit einem Dosenboden verbunden wird. Für das Verengen des Dosenendes nach dem Einführen des Dosenbodens wird vorzugsweise ein Rollverfahren eingesetzt. Dabei wird eine drehende Rolle relativ zum Dosenmantel um dessen Umfang bewegt. Am eingeführten und dort gehaltenen Dosenboden und vorzugsweise auch an der Formrolle ist die gewünschte Verengungskontur für den Verengungsbereich des Dosenmantels ausgebildet. Beim Rollvorgang wird der Dosenmantel dicht an den Kontaktbereich des Dosenbodens angepresst. Mit einem optimalen Rollverfahren kann beim Verengen eine Faltenbildung verhindert werden. Das Wandmaterial wird dabei etwas in Richtung der Dosenachse gestreckt, so dass im verengten Bereich keine Erhöhung der Wandstärke nötig ist. Das Verengen des Dosenmantels durch Andrücken an einen schulterförmigen Kontaktbereich des Dosenbodens ist problemlos, weil die für die Verbindung benötigte Verengung sehr klein ist.

Die Stirnfläche des Dosenbodens liegt im Doseninneren bzw. an der Doseninnenseite und die Stirnfläche des Dosenmantels ausserhalb des Dosenmantels bzw. an der Dosenaussenseite. Wenn die Aussenseite des Dosenmantels mit einem Dekor versehen ist, so erstreckt sich das Dekor nach unten im Wesentlichen bis zur Standfläche. Die Dose ist daher ästhetisch besonders ansprechend und hebt sich von Dosen ab, bei denen der Krümmungsbereich von einem zylindrischen Mantel zum Dosenboden nicht mit einem Dekor versehen ist.

Damit die schulterförmigen aneinander angepassten Bereiche des Dosenbodens und des Dosenmantels, in denen der Querschnitt gegen die Stirnseite des Dosenmantels hin abnimmt, vollständig dicht aneinander anliegen, kann der innen liegende Dosenboden gegebenenfalls ganz wenig in Richtung der Dosenachse gegen aussen bewegt werden, wobei der anliegende Bereich des Dosenmantels minimal aufgeweitet und dabei in dichten Kontakt zum Dosenboden gebracht wird. Im Bereich mit diesem dichten Kontakt kann eine ringförmig geschlossenen Laserschweissnaht zwischen Dosenmantel und Dosenboden angebracht werden.

Es hat sich gezeigt, dass eine Laser-Schweissnaht direkt bei der Stirnseite bzw. bei der Stirnfläche des Dosenmantels vorteilhaft ist. Dort kann mit kleinem Aufwand gewährleistet werden, dass metallische Bereiche vorzugsweise ohne Kunststoffbeschichtung einander zugeordnet sind. Die Stirnfläche des Dosenmantels ist frei von einer Beschichtung. Auch die Aussenseite des Dosenbodens kann ohne Beschichtung ausgebildet werden. Gegebenenfalls wird bei der Stirnseite ein metallisches Pulver zugeführt, das dann beim Laserschweissen eine Verbindung von der Dosenmantel Stirnfläche zum Dosenboden bildet. Um eine Korrosion des Bodens auszuschliessen, kann der Boden nach dem Ausbilden der Laser-Umfangsnaht beschichtet oder mit einer äusseren Bodenabdeckung versehen werden.

Im Rahmen der Erfindung wurde erkannt, dass eine Laser-Umfangsnaht zwischen den überlappenden Bereichen des Dosenbodens und des Dosenmantels, insbesondere bei der Stirnseite des Dosenmantels, nicht unbedingt dicht sein muss. Die Laser-Umfangsnaht erfüllt vorrangig die Aufgabe, den Dosenmantel stabil mit dem Dosenboden zu verbinden. Auch bei einem für Aerosoldosen benötigten Dosen-Innendruck darf die Naht nicht bersten. Es hat sich gezeigt, dass eine stabile Verbindung, die aber nicht mit Sicherheit dicht ist, mit deutlich kleinerem Aufwand erzielt wird als eine absolut dichte Laser-Umfangsnaht. Dies liegt daran, dass die Laser-Umfangsnaht sehr schmal ist, beispielsweise im Wesentlichen 0.15mm breit. Wenn nun im Bereich der Naht eine kleine Verschmutzung an einem der zu verbindenden Teile liegt, so kommt es dort beim Schweissen zu einer explosionsartigen Verdampfung von Verschmutzungsanteilen, insbesondere von Fett- oder Öl-Anteilen. An diesen Stellen kann es kurze Unterbrüche in der Laser-Umfangsnaht geben.

Weil die Dosenböden vorzugsweise an einem anderen Produktionsstandort gegebenenfalls mit einem Schmiermittel verwendenden Herstellungs- bzw. Formverfahren gefertigt werden, können Verschmutzungen von der Herstellung oder vom Transport kaum mit vertretbarem Aufwand vollständig beseitigt werden. Es ist aber mit kleinerem Aufwand möglich im Doseninnern zwischen Dosenboden und Dosenmantel eine Barriere einzubauen, welche das Doseninnere bei der Laserschweissnaht gegen aussen dicht abschliesst. Weil es sich bei den möglicherweise undichten Stellen der Laser-Umfangsnaht um äusserst kleine Durchtrittsstellen handelt, muss die Barriere keine besonders grossen Kräfte aufnehmen.

Um zwischen dem Dosenmantel und dem Dosenboden im Bereich einer Laser-Umfangsnaht, bzw. einer Laser-Verbindung mit einer Reihe von eng begrenzten Verbindungsbereichen, eine dichte Barriere mit kleinem Aufwand bereitstellen zu können, ist gemäss einer weiteren bevorzugten Lösung im Doseninnern entlang der gesamten kreisförmigen Laser-Umfangsnaht bzw. Laser-Verbindung Kunststoffmaterial angeordnet, das mit dem Dosenboden und mit dem Dosenmantel dicht verbunden ist. Dadurch wird ein Zugang vom Doseninneren zur Laser-Umfangsnaht bzw. Laser-Verbindung ausgeschlossen. Die Laser-Umfangsnaht bzw. Laser-Verbindung gewährleistet die nötige Festigkeit und das mit dem Boden und dem Dosenmantel verbundene Kunststoffmaterial die Dichtigkeit.

Das Kunststoffmaterial entlang der Laser-Umfangsnaht kann als Ring oder Teller mit Ringrand auf den Dosenboden aufgelegt, mit einer Düse aufgespritzt oder auch in einem Spritzgussschritt am Dosenboden aufgebaut werden. Vor oder nach dem Ausbilden der Laser-Umfangsnaht wird mit einem Wärmebehandlungsschritt eine dichte Verbindung des Rings zum Dosenmantel und gegebenenfalls zum Dosenboden beidseits der Laser-Umfangsnaht erzielt.

Das dichtende Kunststoffmaterial entlang der Laser-Umfangsnaht zwischen Dosenboden und Dosenmantel ist dann besonders vorteilhaft einsetzbar, wenn der Dosenmantel innen eine Kunststoffschicht, in der Form einer Beschichtung oder vorzugsweise einer Folie, aufweist. Ein Dosenboden mit einer dem Doseninnern zugewandten Kunststoffschicht, die entlang des radial äusseren Randes gegen das Doseninnere bzw. nach oben über den metallischen Randbereich des Dosenbodens vorsteht, kann in den zylindrischen Dosenmantel mit der Innenschicht aus Kunststoff eingeführt werden. Nach dem Einführen liegt ein radial äusserer Kontaktbereich der Kunststoffschicht des Dosenbodens an der Innenschicht des Dosenmantels an.

Wenn der Dosenmantel beim Endbereich, wo der Dosenboden angeordnet wird, etwas verengt ist, hat der Dosenboden einen etwas grösseren Aussenradius als die Durchtrittsöffnung des verengten Bereichs. Wenn der runde Querschnitt des Dosenmantels beim Befestigungsbereich des Dosenbodens mit einem kleinen Druck, bzw. mittels Quetschen, in einen ovalen Querschnitt umgeformt wird, so vergrössert sich der Öffnungsquerschnitt in einer ersten Richtung und verkleinert sich in der senkrecht dazu stehenden zweiten Richtung. Der Dosenboden wird zur Ebene der ovalen Öffnung etwas um eine Achse gekippt, die im Wesentlichen parallel zur ersten Richtung verläuft, und dann ins Innere des Dosenmantels eingeführt. Nach dem Einführen wird er zurückgekippt und von innen an die Verengung angepresst. Im Überlappungsbereich kann der Dosenboden mit einer Laser-Verbindung am Dosenmantel befestigt werden. Mit ring-oder scheibenförmigem Kunststoffmaterial innen entlang der Laser-Verbindung kann eine durchgehende und dichte Innenbeschichtung erzielt werden.

Wie oben bereits beschrieben, kann der Endbereich des Dosenmantels mit einem Umformschritt an eine schulterförmige Kontaktfläche des Dosenbodens umgeformt und mit einer Laser-Umfangsnaht festgesetzt werden. Mit einem Wärmebehandlungsschritt wird die Kunststoffschicht des Dosenbodens im Kontaktbereich zur Innenschicht des Dosenmantels mit dieser verbunden. Dazu umfasst die Kunststoffschicht des Dosenbodens gegebenenfalls zumindest im Bereich der gewünschten Verbindung Siegelmaterial. Der Wärmebehandlungsschritt wird gegebenenfalls vor dem Umformschritt durchgeführt, so dass der Dosenboden beim Umformen bereits etwas am Dosenmantel haftet.

Wenn auf eine Umformung des Dosenmantels beim Dosenboden nach dem Einführen desselben verzichtet werden soll, wird gemäss einer weiteren bevorzugten Lösung am Dosenmantel ein ringnutförmiger Aufnahmebereich für einen entsprechenden nach aussen vorstehenden Kantaktbereich des Dosenbodens ausgebildet. Der Dosenboden soll von aussen bzw. unten gegen den Dosenmantel gedrückt werden, so dass der Kantaktbereich des Dosenbodens in den Aufnahmebereich des Dosenmantels gelangt und darin gehalten ist. Es liegt nun ein von aussen her konvexer Ringnutbereich des Dosenbodens in einem von innen her konkaven Ringnutbereich des Dosenmantels. Die Stirnfläche des Dosenbodens liegt im Doseninneren bzw. an der Doseninnenseite und die Stirnfläche des Dosenmantels ausserhalb des Dosenmantels bzw. an der Dosenaussenseite.

Beim freien unteren Ende des Dosenmantels, also beim Dosenboden, nimmt der Querschnitt des Dosenmantels gegen oben wenig zu und dann wieder ab. Die untere Querschnittsverengung muss sehr klein sein, so dass der Dosenboden mit dem maximalen Aussendurchmesser in das Innere des Dosenmantels eingepresst werden kann. Beim Einpressen wird sich der Mantelbereich bei der unteren Querschnittsverengung elastisch etwas aufweiten und/oder der Dosenboden wird sich beim maximalen Aussendurchmesser etwas verengen. Beim eingepressten Dosenboden liegt entlang des gesamten Umfangs eine Schulter des Dosenbodens innen an einer entsprechenden Schulter des Dosenmantels an. In diesem Schulterbereich nimmt der Querschnitt vom freien Ende des Dosenmantels her so weit ab, dass ein Anschlag gebildet wird. Die Laser-Umfangsnaht wird kreisförmig geschlossen entlang der aneinander gepressten Schulterbereiche ausgebildet. Nach dem verengten Schulterbereich nimmt der Durchmesser des Dosenmantel wieder zu. Von aussen ist am Dosenmantel beim Schulterbereich und direkt darüber eine Vertiefungsnut erkennbar.

Es ist vorteilhaft, wenn der Kontaktbereich des Dosenbodens ins Innere des Dosenmantels eingesteckt wird. Die Mächtigkeit des Dosenbodens wird meist etwas grösser gewählt als die Mächtigkeit des Dosenmantels. Entsprechend ist der Schulterbereich des Dosenbodens etwas formstabiler als der Schulterbereich des Dosenmantels. Ein optimaler Presssitz wird erzielt, wenn der stabilere Schulterbereich von innen gegen den etwas weniger stabilen Schulterbereich gepresst wird. Der äusserer Schulterbereich wird gegebenenfalls in Umfangsrichtung etwas gedehnt, der innere und stabilere Schulterbereich wird dabei aber nicht verformt, bzw. nicht gestaucht. Wenn der Dosenmantel innen und der stabilere Dosenboden aussen wäre, so könnten sich aufgrund der Presskraft im Dosenmantel Stauchfältchen bilden, was eine dichte Laser-Umfangsnaht verhindern würde.

Um beim Übergang vom Dosenmantel zum Dosenboden eine durchgängige-Innenbeschichtung zu gewährleisten, wird der Dosenboden innen beschichtet und mit einer schmelzbaren Dichtungswulst versehen. Der Dosenmantel ist innen mit einer Folie beschichtet, wobei der Schulterbereich für die Verbindung zum Dosenboden keine Beschichtung aufweist. Der Dosenboden hat an seiner vom Doseninneren abgewandten Aussenseite zumindest im Schulterbereich keine Beschichtung. Die Laser-Umfangsnaht wird nun zwischen direkt aneinander anliegenden metallischen Bereich des Dosenmantels und des Dosenbodens ausgebildet. Um die im Doseninnern liegende Stirnfläche des Dosenbodens und den daran anschliessenden unbeschichteten Bereich des Dosenmantels zu beschichten, wird die schmelzbare Dichtungswulst erwärmt und so zum Fliessen sowie zum anschliessenden Verfestigen gebracht, dass das Material der Dichtungswulst eine vollständige Verbindung zwischen den Innenbeschichtungen des Dosenmantels und des Dosenbodens bildet.

Um auf der Dosenunterseite eine Schutzschicht bereitzustellen, wird eine äussere Bodenabdeckung, vorzugsweise in der Form eines Kunststoffbodens, am unteren Dosenende festgesetzt. Wenn sich die Bodenabdeckung etwas vom Dosenboden entlang der Dosenwand erstreckt, so kann sie in die Vertiefungsnut direkt über der Laser-Umfangsnaht eingreifen. Dabei überdeckt die Bodenabdeckung die untere Stirnseite des Dosenmantels und die Laser-Umfangsnaht. Wenn die Bodenabdeckung bei der Vertiefungsnut dicht mit dem Dosenmantel verbunden ist und die Dosenwand eine Aussenfolie umfasst, so ist die metallische Schicht des Dosenmantels und des Dosenbodens gegen aussen dicht abgeschlossen und Oxidationsprobleme können ausgeschlossen werden. Weil die Bodenabdeckung vorzugsweise den gesamten Dosenboden überspannt, kann auf eine Aussenbeschichtung des Dosenbodens verzichtet werden.

Mit den oben beschriebenen Lösungen kann für Aerosoldosen eine durchgehende Innenbeschichtung bereitgestellt werden. Besonders vorteilhaft ist es, wenn der Dichtungsring im Ventilsitz mit der Innenbeschichtung des Dosenmantels und der Innenbeschichtung der Verbindungsschale sowie das Kunststoffmaterial entlang der Laser-Umfangsnaht zwischen Dosenboden und Dosenmantel mit der Innenbeschichtung des Dosenmantels und der Innenbeschichtung des Dosenbodens verbunden ist. Mit zwei ringförmigen Bereichen, welche die verschiedenen Bereiche der Innenbeschichtung miteinander verbinden, kann einfach verhindert werden, dass das Produkt in der Dose mit einer metallischen Schicht des Dosenkörpers in Kontakt gelangt und das Produkt durch minimale Lecks in der Laser-Umfangsnaht austreten könnte.

Die verschiedenen Bearbeitungsschritte können an Drehtellern durchgeführt werden, was aber aufgrund der synchronisierten Übergaben und der auf die Dosendurchmesser abgestimmten Halte- und Übergabeelemente relativ aufwändig ist. Die benötigten Durchsatzleistungen können auch vorteilhaft mit Lösungen erzielt werden, bei denen parallel mehrere lineare Bearbeitungslinien vorgesehen sind. Vor den einzelnen Bearbeitungsstationen können Staubereiche vorgesehen werden, von denen die teilweise zusammengestellten Dosenkörper in die parallelen Bearbeitungslinien geführt werden. Wenn die Produktion von Dosen mit einem ersten zu Dosen mit einem zweiten Durchmesser umgestellt wird, so müssen bei parallelen linearen Bearbeitungslinien nur wenige Elemente an den geänderten Durchmesser angepasst werden.

Mit den erfinderischen Verfahrensschritten ist es möglich Aerosoldosen mit sehr dünnen Dosenmänteln herzustellen. Zum Herstellen der Dosenmänteln kann Stahlblech mit einer Dicke von im Wesentlichen lediglich 0.16mm verwendet werden. Gegebenenfalls kann auch Blech mit Dicken zwischen 0.16 und 0.12mm verwendet werden.

Die Zeichnungen erläutern die erfindungsgemässe Lösung anhand von Ausführungsbeispielen. Dabei zeigt
- Fig. 1a: einen Vertikalschnitt durch das obere Ende einer Aerosoldose mit Verengung und Ventilsitz,
- Fig. 1b: einen Vertikalschnitt durch das obere Ende einer Aerosoldose mit eingesetz- tem Ventilsitz,
- Fig. 2: einen Vertikalschnitt durch das obere Ende einer Aerosoldose mit zwei Situa- tionen (links, rechts) beim Einsetzen eines Ventilteils,
- Fig. 3: einen Vertikalschnitt durch das untere Ende einer Aerosoldose,
- Fig. 4, 5a, 5b: Vertikalschnitte durch das untere Ende einer Aerosoldose beim Einsetzen des Dosenbodens,
- Fig. 6: einen Vertikalschnitt durch das untere Ende einer Aerosoldose mit Dosenbo- den und äusserer Bodenabdeckung,
- Fig. 7a, 7b, 7c und 7d: Vertikalschnitte durch den Dosenmantel und eine Veren- gungsvorrichtung beim Ausbilden des Dosenhalses mit dem Ventilsitz
- Fig. 8a, 8b und 8c: Vertikalschnitte durch den Dosenmantel beim Einsetzen des Dich- tungsringes,
- Fig. 9a, 9b und 9c: Vertikalschnitte durch den Dosenmantel und eine Formvorrichtung beim Formen des Dosenkörpers,
- Fig. 10: eine schematische Schnittdarstellung der Innen- und Aussenbeschichtung ei- nes zylindrischen Mantels mit einer Innen und einer Aussenfolie,
- Fig. 11a, 11b, 11c: Vertikalschnitte durch die Verbindung des oberen Abschlussteils mit dem Dosenmantel,
- Fig. 11d: einen Ausschnitt einer Draufsicht auf die Verbindung des oberen Abschluss- teils mit dem Dosenmantel,
- Fig. 12: eine schematische Darstellung einer Vorrichtung zum Verbinden des oberen Abschlussteils mit dem Dosenmantel,
- Fig. 13: eine schematische Darstellung einer Scannerlaser-Vorrichtung beim Ausbil- den einer kreisförmigen Laser-Verbindung,
- Fig. 14a: ein Vertikalschnitt durch einen Ausschnitt der Verbindung des Dosenbodens mit der Dosenwand,
- Fig. 14b: eine Draufsicht auf einen Ausschnitt der Verbindung des Dosenbodens mit der Dosenwand,
- Fig. 15a, 15b, 15c: Vertikalschnitte durch den Dosenmantel und den Dosenbo- den beim Einsetzen des Dosenbodens,
- Fig. 16a, 16b, 16c: schematische Draufsichten auf den Dosenmantel und den Dosenboden beim Einsetzen des Dosenbodens,
- Fig. 17a: eine stirnseitige Ansicht eines aus einer Tafel mit einer Laser- Verbindung hergestellten Dosenmantels,
- Fig. 17b: eine seitliche Ansicht eines aus einer Tafel mit einer Laser- Verbindung hergestellten Dosenmantels und
- Fig. 18a, 18b: vergrösserte Ausschnitte von Vertikalschnitten durch die Laser- Verbindung eines Dosenmantels

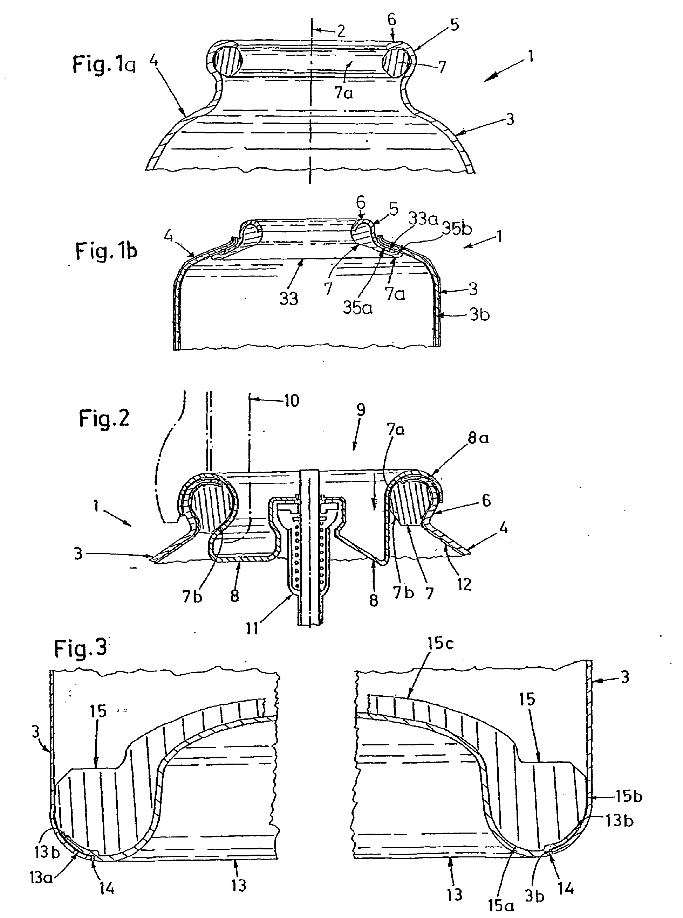

Fig. 1a zeigt das obere Ende eines Aerosol-Dosenkörpers 1 mit einem um eine Dosenachse 2 geschlossenen Dosenmantel 3, dessen Querschnitt gegen das obere Ende hin in einem Bereich mit dem Dosenhals 4 verengt ist. Am freien Ende des Dosenhalses 4 ist ein Ventilsitz 5 mit einer Einwärts-Randbördelung 6 und einem in der Einwärts-Randbördelung 6 eingesetzt Dichtungsring 7 ausgebildet. Der Dichtungsring 7 wird von der Einwärts-Randbördelung 6 nur gehalten und ist vom Inneren des Dosenkörpers her entlang seines ganzen Umfangs zugänglich. Die Einwärts-Randbördelung 6 ist in einer Schnittebene, welche die Dosenachse 2 umfasst, c-förmig gegen das Innere des Dosenkörpers hin offen ausgebildet. In diesem offenen Bereich umfasst der Dichtungsring 7 eine ringförmig geschlossenen Kontaktfläche 7a.

Fig. 1b zeigt das obere Ende einer Aerosoldose 1 mit einem oberen Abschlussteil 33 an dem der Ventilsitz 5 mit einer Einwärts-Randbördelung 6 und einem in der Einwärts-Randbördelung 6 eingesetzt Dichtungsring 7 ausgebildet ist. Der Dosenmantel 3 ist am oberen Ende und somit beim oberen Abschlussteil 33 zu einem Dosenhals 4 verengt. Der obere Abschlussteil 33 hat einen entsprechend geformten Überlappungsbereich 33a, der mit einer Laser-Verbindung am verengten Bereich des Dosenmantels 3 fest geschweisst ist. Im Doseninnern ist entlang der kreisförmigen Laser-Verbindung Kunststoffmaterial 7a angeordnet, das entlang eines oberen Verbindungsbereiches 35a mit dem oberen Abschlussteil 33 und entlang eines äusseren Verbindungsbereiches 35b mit dem Dosenmantel 3 dicht verbunden ist. Wenn innen am Dosenmantel 3 eine Innenbeschichtung oder eine Innenfolie 3b angeordnet ist, so wird der äussere Verbindungsbereich 35b des Kunststoffmaterials 7a vorzugsweise mit einer Wärmebehandlung dicht mit der Innenbeschichtung 3b verbunden. Das Kunststoffmaterial 7a kann als separater Ring ausgebildet werden, vorzugsweise aber wird es einteilig mit dem Dichtungsring 7 ausgebildet. Aussen am Dosenmantel 3 ist gegebenenfalls eine Aussenfolie 30 mit einem Dekor angeordnet.

Fig. 2 zeigt wie am Ventilsitz 5 die Verbindungsschale 8 eines Ventilteils 9 aufgesetzt und festgecrimpt wird. Zentral an der Verbindungsschale 8 ist das Ventil 11 angeordnet. Auf der rechten Seite ist das Ventilteil 9 lediglich auf den Ventilsitz 5 aufgesetzt, so dass der Eingriffsbereich bzw. die Verbindungsschalen-Bördelung 8a die Einwärts-Randbördelung 6 und den Dichtungsring 7 je teilweise umgreift. Die Verbindungsschalen-Bördelung 8a liegt an der ringförmig geschlossenen Kontaktfläche 7a des Dichtungsrings 7 an. Nach dem auf der linken Seite schematisch dargestellten Festcrimpen liegt der Verbindungsschalen-Bördelung 8a zudem in einem vom kleinsten Öffnungsdurchmesser des Dichtungsringes 7 ausgehenden, gegen das Doseninnere bzw. etwas nach unten führenden Bereich am Dichtungsring 7 an. Dadurch umfasst die Kontaktfläche zwischen dem Dichtungsring 7 und der Verbindungsschalen-Bördelung 8a eine ringförmig geschlossene innere Teilfläche 7b.

Das zum Festcrimpen eingesetzte Crimpwerkzeug 10 mit inneren und äusseren Backen presst die Verbindungsschalen-Bördelung 8a etwas um den Dichtungsring 7. Weil der Dichtungsring 7 elastisch ist, liegt die Verbindungsschalen-Bördelung 8a nach dem Festcrimpen entlang des gesamten Umfangs spaltfrei am Dichtungsring 7 an. Der Dichtungsring 7 liegt auch dicht an einer inneren Kontaktfläche der Einwärts-Randbördelung 6 des Dosenkörpers 1 an. Weil die Stirnseite bzw. Stirnfläche der Einwärts-Randbördelung 6 und somit des Dosenmantels 3 vom Dichtungsring 7 und von der Verbindungsschalen-Bördelung 8a umschlossen ist, kann das Produkt im Doseninnern nicht zur Stirnseite gelangen.

Nach dem Befüllen und dem Druckaufbau in der Dose wirkt der Innendruck der Dose über die Verbindungsschale 8 auch auf den Dichtungsring 7. Der Innendruck erhöht die Anpresskraft zwischen der Verbindungsschale 8 und dem Dichtungsring 7 bzw. der inneren Teilfläche 7b. Durch die auf den Dichtungsring 7 wirkende Kraft wird auch die Anpresskraft zwischen dem Dichtungsring 7 und der Einwärts-Randbördelung 6 des Dosenkörpers 1 erhöht. Der Ventilsitz 5 mit dem an der Verbindungsschale 8 anliegenden Dichtungsring 7 ermöglicht eine einfach aufgebaute vollständig dichte Verbindung zwischen dem Dosenmantel 3 und dem Ventilteil 9. Der Innendruck ist nicht mit der Gefahr eines Lecks verbunden, sondern erhöht vielmehr die Dichtheit.

Gemäss einer bevorzugten Ausführungsform umfassen der Dosenmantel 3 und die Verbindungsschale 8 des Ventilteils 9 eine Schicht aus Metall, insbesondere Eisen- bzw. Stahlblech, und auf den Innenseiten des Dosenmantels und der Verbindungsschale eine Innenschicht aus Kunststoff. In der Fig. 2 ist eine Dosenmantel-Innenschicht 12 dargestellt. Die Kunststoffschichten des Dosenmantels 3 und der Verbindungsschale 8 erstrecken sich bis unter den Dichtungsring 7, so dass vom Doseninnern gesehen auch im Verbindungsbereich zwischen Dosenmantel 3 und Verbindungsschale 8 eine durchgehende Innenbeschichtung gewährleistet ist. Wie bereits oben erwähnt, ist die Stirnseite des Dosenmantels 3 vom Dichtungsring 7 und von der Verbindungsschalen-Bördelung 8a umschlossen.

Eine Verbindung vom Dichtungsring 7 zu den Innenbeschichtungen des Dosenmantels 3 und der Verbindungsschale 8 ist bei den Kontaktfächen mit kleinem Aufwand zu erzielen. Gegebenenfalls schmilzt eine oberflächliche Kontaktschicht des Dichtungsringes 7 und verbindet sich dabei mit den Innenbeschichtungen. Wenn an den anliegenden Kontaktflächen auch ein schmelzfähiges Kunststoffmaterial angeordnet ist, so verschmelzen die aneinander anliegenden Kontaktflächen aufgrund der Wärmebehandlung. Wenn eine Siegelbeschichtung eingesetzt wird, so ist es vorteilhaft, wenn diese am Dichtungsring 7 angeordnet ist. Um die Siegelverbindung im gewünschten Augenblick, nämlich nach der richtigen Zusammenstellung der Komponenten, ausbilden zu können, wird vorzugsweise ein heiss siegelndes Material verwendet und eine Wärmebehandlung durchgeführt.

Gemäss Fig. 3 ist der Dosenmantel 3 bei einem Dosenboden 13 etwas schulterförmig verengt. Der Dosenboden 13 hat einen entsprechend geformten Überlappungsbereich 13a, der mit einer Laser-Umfangsnaht 14 am verengten Bereich des Dosenmantels 3 fest geschweisst ist. Im Doseninnern ist entlang der kreisförmigen Laser-Umfangsnaht 14 Kunststoffmaterial 15 angeordnet, das entlang eines unteren Verbindungsbereiches 15a mit dem Dosenboden 13 und entlang eines äusseren Verbindungsbereiches 15b mit dem Dosenmantel 3 dicht verbunden ist. Das Kunststoffmaterial 15 kann als Ring oder Teller mit Ringrand auf den Dosenboden 13 aufgelegt, mit einer Düse aufgespritzt oder auch in einem Spritzgussschritt am Dosenboden 13 aufgebaut werden. Wenn ein zentraler Deckbereich 15c des Kunststoffmaterials 15 den mittleren Bereich des Dosenbodens 13 überdeckt, so kann mit kleinem Aufwand ein Dosenkörper 1 hergestellt werden, dessen gesamte Innenfläche eine Kunststoffschicht aufweist.

Der untere Endbereich des Dosenmantels 3 ist dicht an den im Schnitt schulterförmigen Überlappungsbereich des Dosenbodens 13 angelegt. Die Umfangs-Stirnfläche 13b des Dosenbodens 13 liegt im Doseninneren bzw. an der Doseninnenseite und die untere Stirnfläche 3b des Dosenmantels 3 ausserhalb des Dosenbodens 13. Vorzugsweise wird die Laser-Umfangsnaht 14 direkt bei der unteren Stirnseite bzw. bei der unteren Stirnfläche 3b des Dosenmantels 3 ausgebildet.

Wenn die Laser-Umfangsnaht 14 direkt bei der Stirnseite des Dosenmantels 3 liegt, kann mit kleinem Aufwand gewährleistet werden, dass metallische Bereiche vorzugsweise ohne Kunststoffbeschichtung einander zugeordnet sind. Die untere Stirnfläche des Dosenmantels 3 ist frei von einer Beschichtung. Der Dosenboden 13 kann so ausgebildet werden, dass die Stirnseite des Dosenmantels 13 direkt einer Stufe zugewandt ist, so dass die Aussenkontur des Dosenkörpers beim Übergang von der Aussenfläche des Dosenmantels 3 zur Aussenfläche des Dosenbodens 13 im Wesentlichen stufenfrei verläuft.

In den minimalen Spalt bei der unteren Stirnfläche 3b des Dosenmantels 3 wird gegebenenfalls vor dem Laserschweissen ein metallisches Pulver gefüllt. Beim Laserschweissen das metallische Pulver, die Stirnseite des Dosenmantels 3 und ein anliegender Bereich des Dosenbodens 13 zu einer Verbindungsnaht ausgebildet. Um eine Korrosion des Bodens auszuschliessen, kann der Boden nach dem Ausbilden der Laser-Umfangsnaht beschichtet oder mit einer äusseren Bodenabdeckung versehen werden.

Ausgehend von einem zylindrischen Dosenmantel 3 wäre es möglich, zuerst das untere Ende des Dosenmantels 3 zu verengen. Der Dosenboden 13 müsste dann vor dem Ausbilden des Halsteiles vom oberen Ende her in den Dosenmantel 3 eingeführt werden. Weil dann aber das Verengen des Halsteils mit eingesetztem Dosenboden 13 durchgeführt werden müsste, ist dieses Verfahren nachteilig.

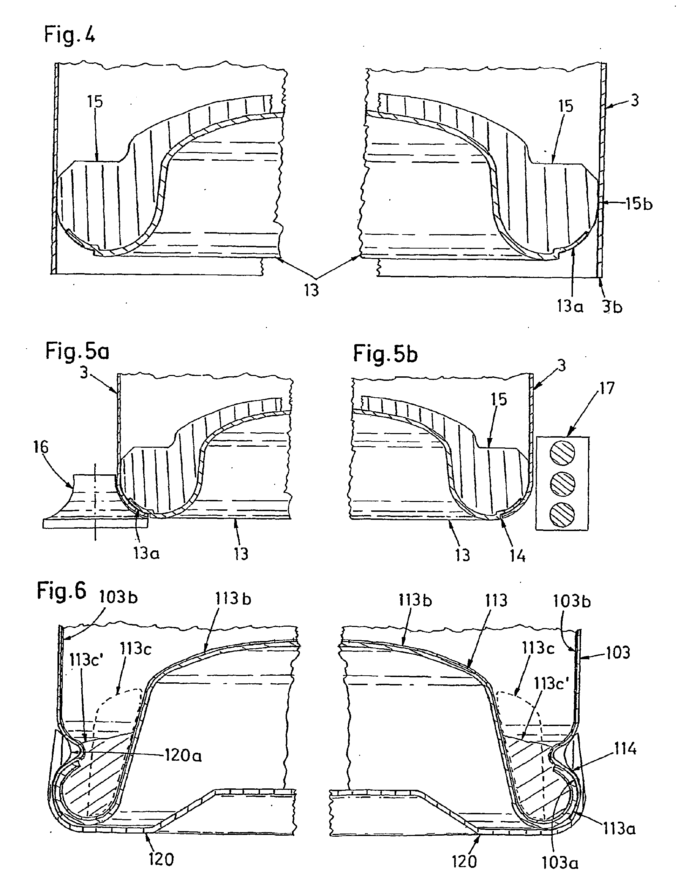

Die Fig. 4, 5a und 5b zeigen verschiedene Schritte beim bevorzugten Verbinden des Dosenmantels 3 mit dem Dosenboden 13. Der Dosenboden 13 wird von der unteren Stirnseite des Dosenmantels 3 in den Dosenmantel 3 eingeführt. Gegebenenfalls wird mit einem Wärmebehandlungsschritt der äussere Verbindungsbereiches 15b mit dem Dosenmantel 3 dicht verbunden. Es ist aber ebenso zweckmässig, wenn diese Verbindung erst nach der Laser-Umfangsnaht 14 ausgebildet wird.

Gemäss Fig. 5a wird für das Verengen des Dosenmantels 3 nach dem Einführen des Dosenbodens 13 vorzugsweise ein Rollverfahren eingesetzt. Dabei wird eine drehende Rolle 16 relativ zum Dosenmantel 3 um dessen Umfang bewegt. Am eingeführten und dort gehaltenen Dosenboden 13 und vorzugsweise auch an der Formrolle 16 ist die gewünschte Verengungskontur für den Verengungsbereich des Dosenmantels 3 ausgebildet. Beim Rollvorgang wird der Dosenmantel 3 dicht an den Kontaktbereich 13a des Dosenbodens 13 angepresst. Mit einem optimalen Rollverfahren kann beim Verengen eine Faltenbildung verhindert werden. Das Wandmaterial wird dabei etwas in Richtung der Dosenachse 2 gestreckt, so dass im verengten Bereich keine Erhöhung der Wandstärke nötig ist. Das Verengen des Dosenmantels 3 durch Andrücken an den schulterförmigen Kontaktbereich 13a des Dosenbodens 13 ist problemlos, weil die für die Verbindung benötigte Verengung sehr klein ist. Mit der Laser-Umfangsnaht 14 werden die metallischen Schichten des Dosenmantels 3 und des Dosenbodens 13 miteinander verbunden.

Eine ringförmige induktive Heizvorrichtung 17 wird über den Verbindungsbereich bewegt, um mit der in der metallischen Schicht des Dosenkörpers 1 entstehenden Wärme den äusseren Verbindungsbereich 15b mit der Innenseite des Dosenmantels 3 in Verbindung zu bringen. Wenn das Kunststoffmaterial 15 nur auf den Dosenboden 13 aufgelegt ist, so kann mit der induktiven Heizvorrichtung 17 auch eine Verbindung zwischen dem Dosenboden 13 und dem unteren Verbindungsbereich 15a erzielt werden. Das entlang der Laser-Umfangsnaht 14 verlaufende Kunststoffmaterial 15 ist dann besonders vorteilhaft, wenn es den gesamten Dosenboden 13 überdeckt und wenn der Dosenmantel 3 innen eine Kunststoffschicht aufweist.

Fig. 6 zeigt eine alternative Lösung zum Anordnen des Dosenbodens 113. Am unteren Ende des Dosenmantels 103 ist ein von unten eingeführter Dosenboden 113 fest geschweisst, wobei ein von aussen her konvexer Ringnutbereich 113a des Dosenbodens 113 an einem von innen her konkaven Ringnutbereich 103a des Dosenmantels 103 anliegt und eine Laser-Umfangsnaht 114 kreisförmig geschlossen in einem Schulterbereich ausgebildet ist, in welchem der Querschnitt vom unteren Ende des Dosenmantels 103 gegen oben abnimmt. Vorzugsweise wird eine äussere Bodenabdeckung 120 am unteren Ende des Dosenmantels 103 festgesetzt, welche die Laser-Umfangsnaht 114, die untere Stirnseite des Dosenmantels 103 und den Dosenboden 113 überdeckt. Die äussere Bodenabdeckung 120 kann beispielsweise mit einem Einrastring 120a in eine entsprechende Ringnut des Dosenmantels 103 eingreifen. Gegebenenfalls ist die äussere Bodenabdeckung 120 auch am unteren Dosenende festgesiegelt.

Um beim Übergang vom Dosenmantel 103 zum Dosenboden 113 eine durchgängige Innenbeschichtung zu gewährleisten, wird der Dosenboden 113 mit einer Boden-Innenbeschichtung 113b und mit einer schmelzbaren Dichtungswulst 113c versehen. Der Dosenmantel 103 ist innen mit einer Innenfolie 103b beschichtet, wobei der Schulterbereich für die Verbindung zum Dosenboden 113 vorzugsweise keine Beschichtung aufweist. Der Dosenboden 113 wiederum hat an seiner vom Doseninneren abgewandten Aussenseite zumindest im Schulterbereich keine Beschichtung. Die Laser-Umfangsnaht 114 wird nun zwischen direkt aneinander anliegenden metallischen Bereich des Dosenmantels und des Dosenbodens ausgebildet. Um die im Doseninnern liegende Stirnfläche des Dosenbodens 113 und den daran anschliessenden unbeschichteten Bereich des Dosenmantels 103 zu beschichten, wird die schmelzbare Dichtungswulst 113c erwärmt und so zum Fliessen sowie zum anschliessenden Verfestigen gebracht, dass die entstehende Bodendichtung 113c' eine vollständige Verbindung zwischen den Innen beschichtungen 103b, 113b des Dosenmantels 103 und des Dosenbodens 113 bildet.

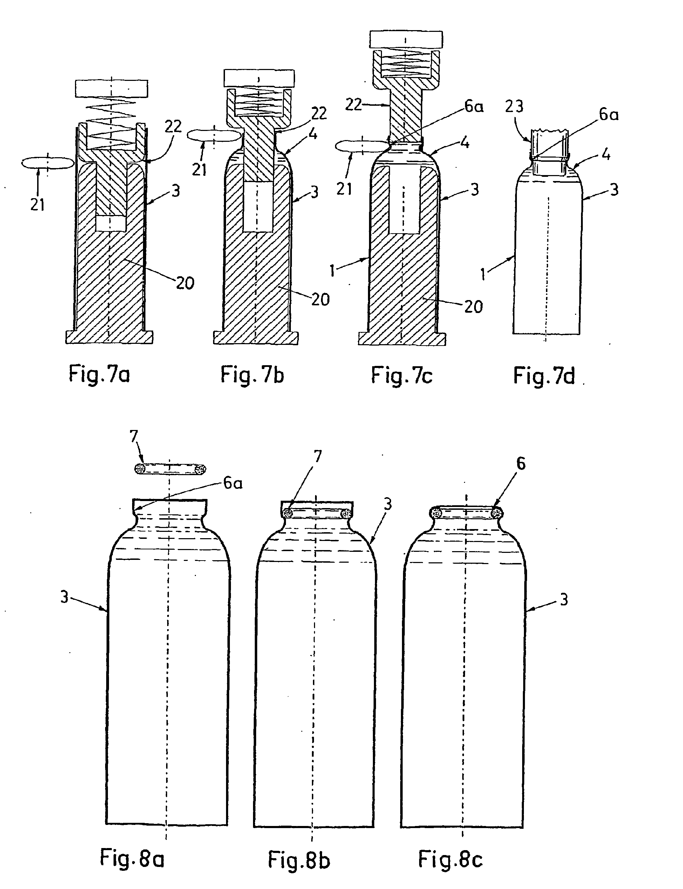

Ein Dosenkörper 1 mit einer Einwärts-Randbördelung 6 und mit einem darin gehaltenen Dichtungsring 7 wird vorzugsweise aus einem zylindrischen Dosenmantel 3 mit einer gestossenen Laser-Längsnaht hergestellt. Die Figuren 7a, 7b, 7c und 7d zeigen, wie der Halsteil 4 mit einem Spin-Flow-Necking-Verfahren verengt wird. Beim schematisch dargestellten Verfahren wird der untere zylindrische Bereich des Dosenmantels 3 auf einem drehbaren Dorn 20 gehalten. Eine äussere Verengungsrolle 21 wird zum Ausbilden des Halsteils 4 an den drehenden Dosenmantel 3 gepresst und entsprechend dem jeweiligen Einschub auch nach oben verschoben. Ein oberes Führungsteil 22 wird beim Verengen nach oben bewegt und ermöglicht das Ausbilden eines oberen zylindrischen Endbereiches. Gegebenenfalls hat das obere Führungsteil einen unteren Endbereich an dem ein Sitz 6a - in der Form einer Verengung - für den Dichtungsring 6 ausgeformt werden kann. Der Sitz 6a kann gemäss Fig. 7d auch durch das Einführen eines Aufweitungsteiles 23 ausgebildet werden.

Auf den verengten inneren Sitz 6a wird gemäss Fig. 8a und 8b ein Dichtungsring gelegt. Anschliessend wird wie in Fig. 8c dargestellt das freie Ende des Dosenhalses radial nach innen etwas um den Dichtungsring 7 zur Einwärts-Randbördelung 6 umgeformt.

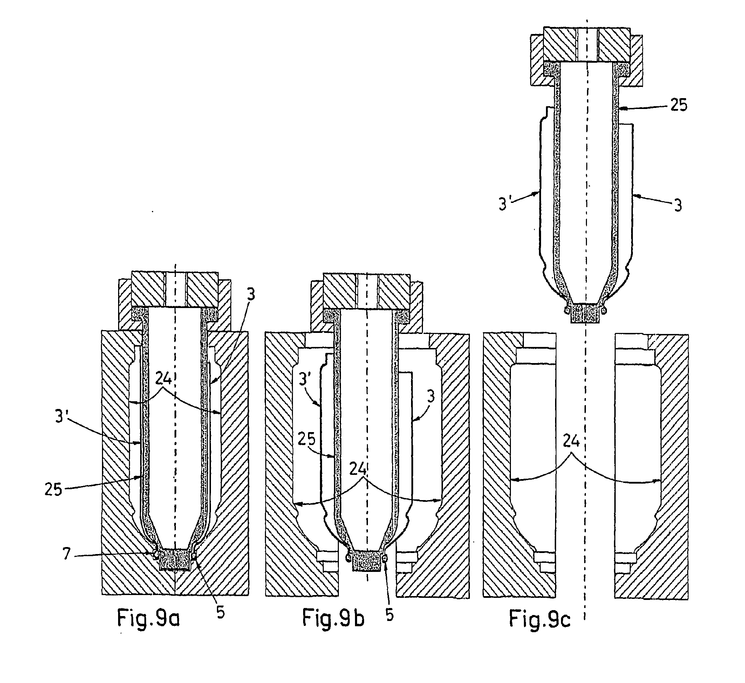

Gemäss Fig. 9a, 9b und 9c kann der Ventilsitz 5 mit dem Dichtungsring 7 vorteilhaft zur Positionierung eines kürzeren oder eines längeren Dosenmantels 3 bzw. 3' in einer zweiten Innenform 24 verwendet werden. Die zweite Innenform 24 entspricht einer gewünschten Endform des Dosenmantels und umfasst beispielsweise zwei Formhälften, die zum Dosenmantel 3 bzw. 3' zusammengefahren werden können, wobei der Ventilsitz 5 in entsprechende Aufnahmen der Formhälften aufgenommen wird. Die zweite Innenform 24 kann beliebige von der Zylinderform abweichende Formen und Dekorstrukturen aufweisen.

Zum Pressen ist ein elastischer mit Druckfluid beaufschlagbarer zweiter Pressdorn 25 in den Dosenmantel 3 bzw. 3' eingeführt. Der Ventilsitz 5 und damit der Dosenmantel 3 wird beim Pressen in Achsrichtung verschiebungsfrei gehalten. Der Ventilsitz 5 wird nicht aufgeweitet. Durch das Halten des Dosenmantels 3 bzw. 3' am Ventilsitz 5 ist eine definierte Lage des Dosenmantels 3 bzw. 3' relativ zur zweiten Innenform 24 gewährleistet. Bei den dargestellten unterschiedlich langen Dosenmänteln 3 und 3' ist der kürzere 3 bis zum unteren Ende zylindrisch, beim längeren 3' ist unten ein verengter Bereich ausgebildet. Der verengte Bereich kann als Anschlussbereich an einen Dosenboden ausgebildet sein.

Wenn anschliessend an den verengten Bereich beim freien Ende des Dosenmantels 3' noch ein zylindrischer Mantelabschnitt ausgebildet ist, so muss dieser abgetrennt werden. Um auf das Abtrennen und damit auf einen zusätzlichen Aufwand verzichten zu können, wird die Höhe des Wandmaterials für den Dosenmantel so gewählt, dass sich der verengte Bereich nach dem Pressen bis zum freien Ende erstreckt.

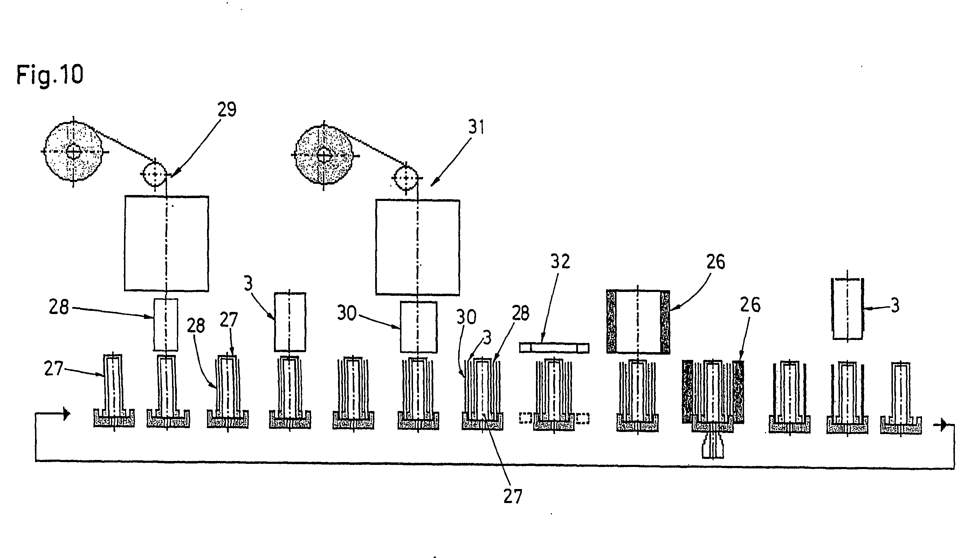

Fig 10 zeigt schematisch eine Anlage mit der eine Innen- und/oder eine Aussenfolie am geschlossenen Zylindermantel aus Metallblech angeordnet werden kann. Dazu wird zumindest ein elastischer mit Druckfluid beaufschlagbarer erster Pressdorn 27 und eine erste Innenform 26 verwendet. Um die Lagen des Dosenmantels 3 mit kleinem Aufwand zusammenzubringen wird das Zusammenbringen vorzugsweise mit lediglich einem Pressdorn und einer Innenform durchgeführt. Die Innenfolie 28 wird von einer ersten Zuführeinrichtung 29 zu einem Zylindermantel geschlossen und auf den Pressdorn 27 aufgesetzt, so dass sie diesen eng umschliesst. Anschliessend wird der metallische Dosenmantel 3 aufgesetzt, welcher nun die Innenfolie 28 umschliesst. Zuletzt wird die Aussenfolie 30 von einer zweiten Zuführeinrichtung 31 zu einem Zylindermantel geschlossen und aussen auf den metallischen Dosenmantel 3 aufgesetzt, so dass sie diesen umschliesst. Es versteht sich von selbst, dass gegebenenfalls auch nur die Innenfolie 28 oder nur die Aussenfolie 30 eingesetzt werden kann.

Mit einer induktiven Heizvorrichtung 32 wird der metallische Dosenmantel 3 etwas erwärmt und direkt anschliessend wird der erste Pressdorn 27 mit den daran angeordneten Schichten im Innern der zylindrischen ersten Innenform 26 radial nach aussen ausgedehnt. Um ein Pressen von der Mitte gegen die beiden Stirnseiten hin zu erzielen, kann ein fassförmiger Pressdorn 27 eingesetzt werden, der beim Druckaufbau zuerst im mittleren Bereich presst. Bei der Pressung an die Innenform wird der Umfang aller Schichten des Dosenmantels 3 etwas erhöht. Um ein dauerhaftes Haften der Folien 28, 30 an der metallischen Schicht zu gewährleisten werden Folien 28, 30 mit einer der metallischen Schicht zugewandten Siegelschicht verwendet. Bei einer Heisssiegelschicht wird die gewünschte Siegelung dadurch erreicht, dass den Schichten des Dosenmantels Wärme zugeführt wird, insbesondere die Kontaktwärme vom vorgeheizten metallischen Dosenkörper.

Die mittels Siegelverbindungen zusammengestellten Schichten des zylindrischen Dosenmantels 3 haften derart gut aneinander, dass das anhand der Figuren 7a bis 7d beschriebene Verengungsverfahren durchgeführt werden kann.

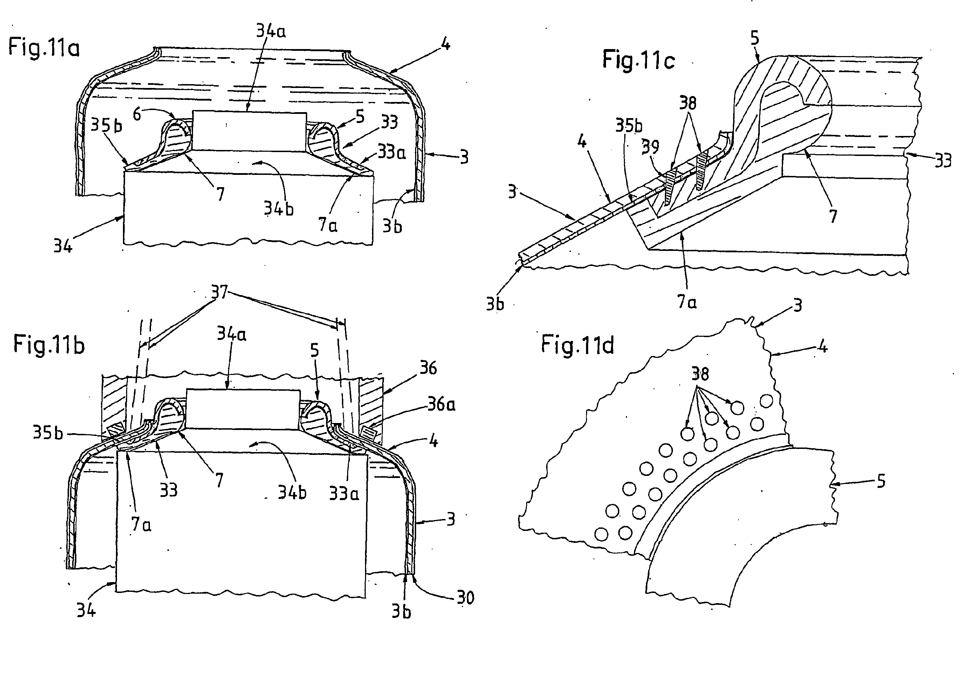

Fig. 11a, 11b, 11c und 11d zeigen das obere zu einem Halsteil 4 verengte Ende eines Dosenmantels 3, der von einer nicht dargestellten Halteeinrichtung gehalten ist. Auf der Innenseite des Dosenmantels 3 ist eine Innenfolie 3b und auf der Aussenseite eine Aussenfolie 30 oder eine Aussenbeschichtung angeordnet. Von unten hebt ein Haltedorn 34 den oberen Abschlussteil 33 gegen die obere Öffnung des Dosenmantels 3. Der obere Abschlussteil 33 umfasst den Ventilsitz 5 mit der Einwärts-Randbördelung 6 und mit dem in der Einwärts-Randbördelung 6 eingesetzten Dichtungsring 7. Um ein präzises Positionieren und Anpressen des oberen Abschlussteils 33 am Halsteil 4 zu gewährleisten, umfasst der Haltedorn 34 einen Zentriervorsprung 34a und eine Anpressfläche 34b. Der obere Abschlussteil 33 wird mit dem an die Verengung des Dosenmantels 3 angepassten Überlappungsbereich 33a von der Anpressfläche 34a an die entsprechende Fläche des Halsteils 4 gepresst.

Um das obere Abschlussteil 33 fest und dicht mit dem Dosenmantel 3 zu verbinden, wird ein oberer Anpressring 36 von oben an den Halsteil 4 angesetzt. Eine Heizvorrichtung 36a ist so ausgebildet und angeordnet, dass Wärme zum äusseren Verbindungsbereich 35b des Kunststoffmaterials 7a geführt werden kann, wobei eine Heisssiegelverbindung zwischen dem oberer Verbindungsbereich 35b des Kunststoffmaterials 7a und der Innenfolie 3b ausbildet wird. Wenn das Kunststoffmaterial 7a einteilig mit dem Dichtungsring 7 ausgebildet ist, so entsteht eine durchgehende Innenbeschichtung von der Innenfolie 3b bis zum Dichtungsring 7.

Mit einem Scanner-Laserstrahl 37 wird im Überlappungsbereich 33a eine metallische Schicht des Dosenmantels 3 mit einer metallischen Schicht des oberen Abschlussteils 33 verbunden. Die entstehende Laser-Verbindung umfasst im Überlappungsbereich 33a eine Vielzahl von eng begrenzten Verbindungspunkten 38, bei denen der Laserstrahl die beiden metallischen Schichten miteinander verschmolzen hat. Es hat sich gezeigt dass das Material der Innenfolie 3b beim punktförmigen Einbringen der Laserenergie vom Zentrum des Laserstrahls aus weg geht und sich die beiden metallischen Schichten ohne Störung über die bolzenförmigen ineinander verschmolzenen und erstarrten Schmelzbereiche 39 miteinander verbinden. Die Zeit und die Leistung mit der der Laserstrahl einen Verbindungspunkt 38 erzeugt, wird so gewählt, dass der Schmelzbereich 39 nicht vollständig durch die metallische Schicht des oberen Abschlussteils 33 durchtritt und die Kunststoffschicht 7a nicht beeinträchtigt wird. Es sind verschiedene Raster und gegebenenfalls verschiedene Querschnitte von Verbindungspunkten möglich, wobei zumindest eine Reihe entlang des Umfangs nötig ist. Über die Steuerung des Scannerlasers kann die Anordnung und Form der Verbindungsbereiche bzw. der Verbindungspunkte mit kleinem Aufwand geändert werden.

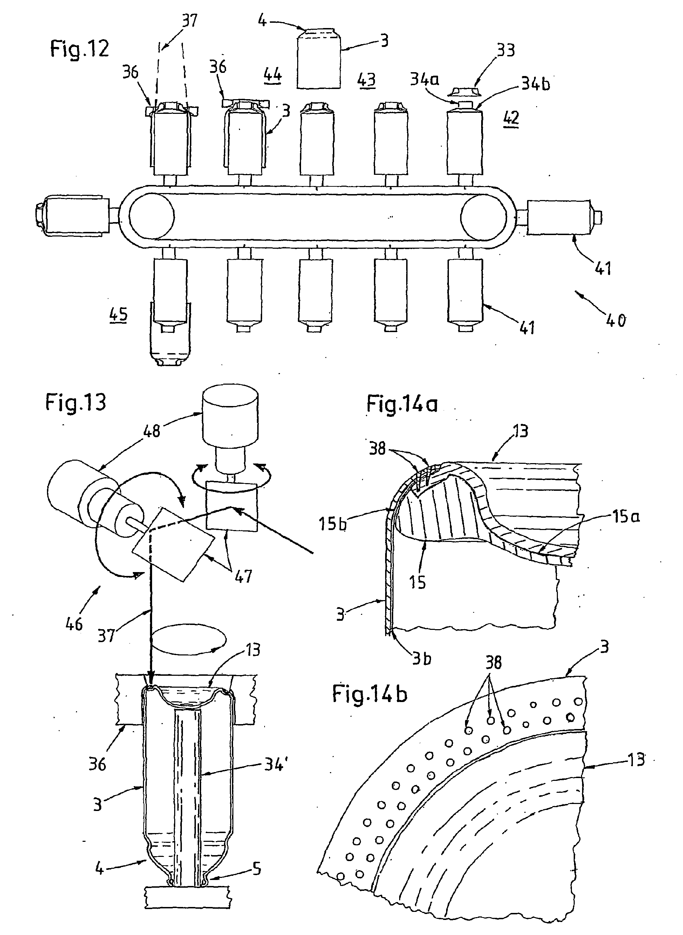

Fig. 12 zeigt eine Ausführungsform einer Vorrichtung zum Verbinden des oberen Abschlussteils mit dem Dosenmantel. An einer umlaufenden Ketten- oder Bandvorrichtung 40 sind abstehende Haltedorne 34 mit einem Zentriervorsprung 34a und einer Anpressfläche 34b befestigt, wobei nebeneinander mehrere Reihen von Haltedornen 34 angeordnet werden können um parallel mehrere Dosenmäntel 3 mit oberen Abschlusselementen 33 zu versehen. In einem ersten Beladbereich 42 werden obere Abschlusselemente 33 auf die Haltedorne 34 aufgelegt. In einem zweiten Beladbereich 43 werden Dosenmäntel 3 über die oberen Abschlusselemente 33 auf die Haltedorne 34 aufgelegt.

Ein oberer Anpressring 36 wird von oben an den Halsteil 4 des Dosenmantels 3 angesetzt und erzielt mit einer Heizvorrichtung eine Siegelverbindung vom Verbindungsbereich 35b des Kunststoffmaterials 7a zur Innenfolie des Dosenmantels 3. Anschliessend wird mit einem Scanner-Laserstrahl 37 eine metallische Schicht des Dosenmantels 3 mit einer metallischen Schicht des oberen Abschlussteils 33 verbunden. Weil weder die Dosenteile gedreht noch die Laserquelle kreisförmig bewegt werden müssen, kann die Laser-Verbindungsanlage einfach aufgebaut werden. Im Abgabebereich 45 wird der Dosenmantel 3 mit oberem Abschlussteil 33 zum Transport zu einer weiteren Dosenbearbeitungsstation abgegeben.

Fig. 13 zeigt eine Scannerlaser-Vorrichtung 46, die mit dem Scanner-Laserstrahl 37 entlang einer Kreislinie eine Laser-Verbindung ausbildet mit einer Vielzahl von eng begrenzten Bereichen, in denen der Laserstrahl zwei metallische Schichten miteinander verschmolzen hat. Beim dargestellten Behandlungsschritt wird ein Dosenboden 13 von innen an eine untere Verengung des Dosenmantels 3 gepresst und mit der Laser-Verbindung befestigt. Im Doseninnern drückt ein Haltedorn 34' den Dosenboden 13 gegen die Verengung des Dosenmantels 3, wobei der Dosenmantel 3 vom Anpressring 36 gegen den Dosenboden 13 gehalten wird.

Der Scanner-Laserstrahl 37 gelangt von einer nicht dargestellten Laserquelle über zwei um senkrecht zueinander stehende Achsen drehbare Spiegel 47 bzw. Reflektionsflächen zum kreisringförmigen Bereich in dem die Laser-Verbindung ausgebildet werden soll. Eine nicht dargestellte Steuerung und zwei Antriebe 48 betätigen die Drehausrichtung der beiden Spiegel 47.

Es versteht sich von selbst, dass mit der Scannerlaser-Vorrichtung 46 anstelle des Dosenbodens auch ein anderes Abschlusselement am Dosenmantel 3 befestigt werden kann. Zudem könnte das Abschlusselement auch stirnseitig aussen am Dosenmantel angeordnet werden. Diese Lösung ist somit nicht auf Aerosol-Dosen und natürlich auch nicht auf spezielle Aerosol-Dosen mit einer Einwärts-Randbördelung eingeschränkt.

Fig. 14a und 14b zeigen eine mit der Scannerlaser-Vorrichtung 46 hergestellte Laser-Verbindung. Diese umfasst im Überlappungsbereich der miteinander verbundenen Teile eine Vielzahl von eng begrenzten Verbindungspunkten 38, bei denen der Laserstrahl die beiden metallischen Schichten miteinander verschmolzen hat. Es hat sich gezeigt dass das Material der Innenfolie 3b beim punktförmigen Einbringen der Laserenergie vom Zentrum des Laserstrahls aus weg geht und sich die beiden metallischen Schichten ohne Störung über die bolzenförmigen ineinander verschmolzenen und erstarrten Schmelzbereiche 39 miteinander verbinden. Es sind verschiedene Raster von Verbindungspunkten möglich, wobei zumindest eine Reihe entlang des Umfangs nötig ist. Über die Steuerung des Scannerlasers kann die Anordnung und Form der Verbindungsbereiche bzw. der Verbindungspunkte mit kleinem Aufwand geändert werden.

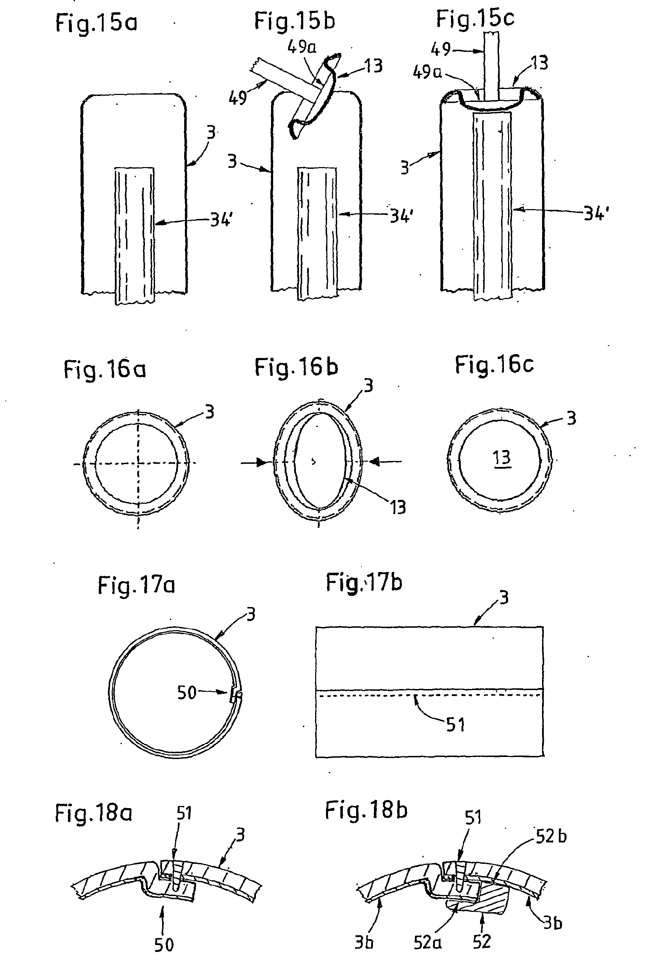

Fig. 15a, 15b und 15c sowie 16a, 16b und 16c zeigen das Einsetzen eines Dosenbodens 13 durch den verengten Endbereich des Dosenmantels 3. Wenn der Dosenmantel 3 beim Endbereich, wo der Dosenboden 13 angeordnet wird, etwas verengt ist, hat der Dosenboden 13 einen etwas grösseren Aussenradius als die Durchtrittsöffnung des verengten Bereichs.

In den Fig. 15b und 16b hat ist der Querschnitt des Dosenmantels 3 mit einem kleinen Druck, bzw. mittels Quetschen, in einen ovalen Querschnitt umgeformt. Dabei vergrössert sich der Öffnungsquerschnitt in einer ersten Richtung und verkleinert sich in der senkrecht dazu stehenden zweiten Richtung. Der Dosenboden 13 wird von einem Einführhalter 49 gehalten, wobei vorzugsweise in einem Saugkontaktbereich 49a zum Halten ein Unterdruck erzeugt wird. Beim Einführen wird der Dosenboden 13 vom Einführhalter 49 zur Ebene der ovalen Öffnung etwas um eine Achse gekippt, die im Wesentlichen parallel zur ersten Richtung verläuft. In der gekippten Lage wird der Dosenboden 13 ins Innere des Dosenmantels 3 eingeführt.

Fig. 15c und 16c zeigen eine Situation nach dem Zurückkippen des Dosenbodens 13 durch das vertikale Ausrichten des Einführhalters 49. Um den Dosenboden 13 auch nach dem Entfernen des Einführhalters 49 von innen an die Verengung anzupressen, wird die obere Stirnfläche des Haltedorns 34' gegen den Dosenboden gedrückt. Im Überlappungsbereich kann der Dosenboden 13 mit einer Laser-Verbindung am Dosenmantel 3 befestigt werden.

Die Laser-Verbindung mit einer Vielzahl von eng begrenzten Bereichen, in denen der Laserstrahl die beiden metallischen Schichten miteinander verschmolzen hat, kann nicht nur bei der Verbindung eines Abschlusselment's mit dem Dosenmantel 3 vorteilhaft eingesetzt werden. Anhand der Fig. 17a, 17b und 18a, 18b wird ein aus einer Tafel mit einer Laser-Verbindung hergestellter Dosenmantel 3 beschrieben. Die Tafel wird zu einem Rohr umgeformt, wobei die beiden einander zugeordneten seitlichen Bereiche in einem Überlappungsbereich 50 entlang der Laser-Verbindung etwas überlappend aneinander anliegen.

Mit einem Laser wird bei dicht aneinander anliegenden seitlichen Bereichen eine Laser-Verbindung 51 ausgebildet, wobei diese Verbindung aus einer Vielzahl von eng begrenzten Verbindungsbereichen besteht. Dabei kann der Dosenmantel 3 relativ zu einer Laseraustrittsstelle bewegt oder die Auftreffstelle eines Scanner-Laserstrahl 37 entlang des Überlappungsbereichs 50 bewegt werden.

Falls der Innenraum des Dosenmantels 3 nicht vollständig von der metallischen Schicht des Dosenmantels 3 getrennt werden muss, so genügt eine Verbindung gemäss Fig. 18a, wo eine innen liegende Stirnseite der metallischen Dosenmantelschicht vom Doseninneren her zugänglich ist.

Um eine vollständige Innenbeschichtung gewährleisten zu können, wird an der metallischen Schicht der Tafel für den Dosenmantel 3 eine Innenfolie 3b oder eine Kunststoffbeschichtung und an der ersten Stirnseite, die im Innern des Dosenmantels 3 zu liegen kommt, eine Kunststoffleiste 52 angeordnet. Eine erste Verbindungsfläche 52a der Kunststoffleiste 52 ist über eine Klebe- oder Siegelverbindung direkt mit der Innenfolie 3b oder mit der Beschichtung bei der ersten Stirnseite verbunden. Nach dem Formen des Dosenmantels liegt eine zweite Verbindungsfläche 52b der Kunststoffleiste 52 in der Nähe der zweiten Stirnseite der metallischen Schicht der Tafel an der Innenfolie 3b art. Mit einer Siegel- oder Klebeverbindung wird auch die zweite Verbindungsfläche 52b dicht mit der Innenfolie 3b bzw. Beschichtung verbunden. Dosenmäntel mit dieser Verbindung können bei der Herstellung beliebiger dreiteiliger Dosen vorteilhaft eingesetzt werden. Dreiteilige Dosen mit einem Dosenmantel mit einer Laser-Längsverbindung 51 mit einer Vielzahl von eng begrenzten Verbindungsbereichen und einer dicht mit der Innenfolie 3b bzw. der Beschichtung verbundenen Kunststoffleiste 52 können mit hoher Qualität einfach hergestellt werden.

## Patentansprüche

1. Aerosol-Dosenkörper (1) mit einem um eine Dosenachse (2) geschlossenen Dosenmantel (3), einem verengten Dosenhals (4) und einem am freien Ende des Dosenhalses (4) ausgebildeten Ventilsitz (5) mit einer Einwärts-Randbördelung (6), **dadurch gekennzeichnet, dass** der Ventilsitz (5) in der Einwärts-Randbördelung (6) eingesetzt einen Dichtungsring (7) umfasst, wobei der Dichtungsring (7) von der Einwärts-Randbördelung (6) nur gehalten und vom Inneren des Dosenkörpers (1) her entlang seines ganzen Umfangs zugänglich ist.

2. Aerosol-Dosenkörper (1) nach Anspruch 1, **dadurch gekennzeichnet, dass** die Einwärts-Randbördelung (6) in einer Schnittebene, welche die Dosenachse (2) umfasst, c-förmig gegen das Innere des Dosenkörpers (1) hin offen ausgebildet ist, wobei der Querschnitt des Dichtungsrings (7) an die Innenform der Einwärts-Randbördelung (6) angepasst ist.

3. Aerosol-Dosenkörper (1) nach Anspruch 1 oder 2, **dadurch gekennzeichnet, dass** der Dosenmantel (3) durch einen radial aufweitenden Pressschritt an einer zweiten Innenform (24) geformt ist, wobei der Ventilsitz (5) beim Pressen in die zweite Innenform (24) lediglich gehalten und nicht aufgeweitet wird.

4. Aerosol-Dosenkörper (1) nach einem der Ansprüche 1 bis 3, **dadurch gekennzeichnet, dass** am Ventilsitz (5) eine Verbindungsschale (8) mit Ventil (11) festgecrimpt ist, wobei die Einwärts-Randbördelung (6) und der Dichtungsring (7) teilweise von einer Verbindungsschalen-Bördelung (8a) umgriffen sind und zwischen der Verbindungsschalen-Bördelung (8a) und dem Dichtungsring (7) eine ringförmig geschlossenen Kontaktfläche (7a) gebildet ist, die in einem Bereich ausgehend vom kleinsten Öffnungsdurchmesser des Dichtungsringes (7) gegen das Doseninnere hin zumindest eine ringförmig geschlossene innere Teilfläche (7b) umfasst.

5. Aerosol-Dosenkörper (1) nach einem der Ansprüche 1 bis 4, **dadurch gekennzeichnet, dass** der Dosenmantel (3) und die Verbindungsschale (8) eine Schicht aus Metall, vorzugsweise Eisenblech, umfassen, auf den Innenseiten des Dosenmantels (3) und der Verbindungsschale (8) eine Innenschicht aus Kunststoff angeordnet ist, und sich die Kunststoffschicht des Dosenmantels (3) und der Verbindungsschale (8) bis zum Dichtungsring (7) erstrecken, so dass auch im Verbindungsbereich zwischen Dosenmantel (3) und Verbindungsschale (8) eine durchgehende Innenbeschichtung gewährleistet ist, wobei der Dichtungsring (7) gegebenenfalls zu mindestens einer anschliessenden Kunststoffschicht eine Schmelz- oder Siegelverbindung aufweist.

6. Aerosol-Dosenkörper (1) nach Anspruch 5, **dadurch gekennzeichnet, dass** die Metallschicht des Dosenmantels (3) in Umfangsrichtung mit einer gestossenen Laser-Längsnaht geschlossen ist und die Kunststoffschicht auf der Innenseite des Dosenmantels (3) von einer Innenfolie (3b) aus Kunststoff gebildet wird.

7. Aerosol-Dosenkörper (1) nach einem der Ansprüche 1 bis 6, **dadurch gekennzeichnet, dass** am vom Ventilsitz (5) abgewandten unteren Ende des Dosenmantels (3) ein Dosenboden (13) mit einer Laser-Verbindung - insbesondere einer Umfangsnaht (14) oder einer Vielzahl von eng begrenzten Verbindungspunkten (38) - fest geschweisst ist, im Doseninnern entlang der gesamten kreisförmigen Laser-Verbindung Kunststoffmaterial (15) angeordnet ist, das mit dem Dosenboden (13) und mit dem Dosenmantel (3) dicht verbunden ist, wobei der untere Endbereich des Dosenmantels (3) dicht an den im Vertikalschnitt schulterförmigen Kontaktbereich (13a) des Dosenbodens (13) angelegt ist, die Umfangs-Stirnfläche (13b) des Dosenbodens (13) im Doseninneren bzw. an der Innenseite des Dosenmantels (3), die untere Stirnfläche (3b) des Dosenmantels (3) ausserhalb des Dosenbodens (13) liegt.

8. Aerosol-Dosenkörper (1) nach einem der Ansprüche 1 bis 6, **dadurch gekennzeichnet, dass** der Ventilsitz (5) an einem oberen Abschlussteil (33) ausgebildet ist, wobei der obere Abschlussteil (33) am Dosenmantel (3) mit einer Laser-Verbindung - gegebenenfalls einer Umfangsnaht, vorzugsweise aber einer Vielzahl von eng begrenzten mit einem Laserstrahl gebildeten Verbindungspunkten (38) - befestigt ist und innen bei der Laser-Verbindung Kunststoffmaterial (7a) angeordnet ist, das eine dichte Verbindung zu einer Innenfolie (3b) des Dosenmantels (3) und zum Dichtungsring 7 gewährleistet.

9. Verfahren zum Herstellen eines Aerosol-Dosenkörpers (1) mit einem um eine Dosenachse (2) geschlossenen Dosenmantel (3) und einem Ventilsitz (5), welches Verfahren einen verengten Dosenhals (4) bei einer Stirnseite des Dosenkörpers (1) bereitstellt und einen Bördelschritt zum Ausbilden einer Einwärts-Randbördelung (6) beim freien Ende des Dosenhalses (4) umfasst, **dadurch gekennzeichnet, dass** in der Einwärts-Randbördelung (6) ein Dichtungsring (7) eingesetzt wird, wobei der Dichtungsring (7) von der Einwärts-Randbördelung (6) nur gehalten und vom Inneren des Dosenkörpers (1) her entlang seines ganzen Umfangs zugänglich ist.

10. Verfahren nach Anspruch 9, **dadurch gekennzeichnet, dass** beim Ausbilden des Dosenhalses (4) an dessen verengtem Ende ein zylindrischer Bereich mit einem verengten innerer Sitz (6a) für den Dichtungsring (7) bereitgestellt, der Dichtungsring (7) durch den zylindrischen Bereich zum Sitz (6a) eingeführt und das freie Ende des Dosenhalses (4) radial nach innen etwas um den Dichtungsring (7) umgeformt wird.

11. Verfahren nach Anspruch 9 oder 10, **dadurch gekennzeichnet, dass** beim Herstellen des Dosenmantels (3) ein Metallblech in Umfangsrichtung des Dosenmantels (3) mit einer gestossenen Laser-Längsnaht zu einem zylindrischen Dosenmantel (3) geschlossen und zusammen mit einer zylindermantelförmigen Innenfolie (28) und/oder einer Aussenfolie (30) auf einem ersten Pressdorn (27) angeordnet wird, der erste Pressdorn (27) mit dem aufgesetzten metallischen Dosenmantel (3) und der mindestens einen daran angeordneten Folie (28, 30) des Dosenmantels (3) im Innern einer zylindrischen ersten Innenform (26) radial nach aussen ausgedehnt wird, so dass die Umfänge aller Schichten des Dosenmantels (3) etwas erhöht werden, zum Erzielen einer dauerhaften Verbindung zwischen der mindestens einen Folie (28, 30) und dem metallischen Dosenmantel (3) die mindestens eine Folie (28, 30) eine der metallischen Schicht zugewandte Siegelschicht umfasst und in einem Siegelschritt unter Wärmezuführung und Anpressung eine Siegelverbindung von der mindestens einen Folie (28, 30) zur metallischen Schicht des Dosenmantels (3) ausgebildet wird.

12. Verfahren nach Anspruch 11, **dadurch gekennzeichnet, dass** der Dosenhals (4) mit dem Ventilsitz (5) entweder an einem freien Ende des zylindrischen Dosenmantels (3) mit einem Verengungsschritt ausgebildet wird, wobei der Dosenmantel (3) beim Verengen um die Dosenachse (2) gedreht, ein Verengungswerkzeug (21) von aussen gegen die Dosenwand gedrückt und in Richtung der Dosenachse (2) bewegt wird, oder dass der Ventilsitz (5) an einem oberen Abschlussteil (33) ausgebildet wird, wobei der obere Abschlussteil (33) am Dosenmantel (3) mit einer Laser-Verbindung - gegebenenfalls einer Umfangsnaht, vorzugsweise aber einer Vielzahl von eng begrenzten mit einem Laserstrahl gebildeten Verbindungspunkten (38) - befestigt wird und innen bei der Laser-Verbindung Kunststoffmaterial (7a) angeordnet ist, das eine dichte Verbindung zu einer Innenfolie (3b) des Dosenmantels (3) und zum Dichtungsring 7 gewährleistet.

13. Verfahren nach einem der Ansprüche 9 bis 12, **dadurch gekennzeichnet, dass** der Dosenmantel (3) durch einen zweiten radial aufweitenden Pressschritt an einer zweiten Innenform (24) geformt wird, wobei der Ventilsitz (5) beim Pressen in die zweiten Innenform (24) lediglich gehalten und nicht aufgeweitet wird.

14. Verfahren nach einem der Ansprüche 9 bis 13, **dadurch gekennzeichnet, dass** am unteren Ende des Dosenmantels (3) ein Dosenboden (13) ins Innere des Dosenmantels (3) eingeführt wird, der Endbereich des Dosenmantels (3) dicht an den im Schnitt schulterförmigen Kontaktbereich (13a) des Dosenbodens (13) angepresst wird und im schulterförmigen Kontaktbereich (13a) der Dosenboden (13) mit einer kreisförmig geschlossenen Laser-Verbindung - gegebenenfalls einer Umfangsnaht (14), vorzugsweise aber einer Vielzahl von eng begrenzten mit einem Laserstrahl gebildeten Verbindungspunkten (38) -,befestigt wird, wobei im Doseninnern entlang der gesamten kreisförmigen Laser-Verbindung Kunststoffmaterial (15) angeordnet ist, das mit dem Dosenboden (13) und mit dem Dosenmantel (3) dicht verbunden wird.

15. Vorrichtung zum Herstellen eines Aerosol-Dosenkörpers (1), der einen um eine Dosenachse (2) geschlossenen Dosenmantel (3) und einen Ventilsitz (5) umfasst, welche Vorrichtung einen verengten Dosenhals (4) und eine Einwärts-Randbördelung (6) beim freien Ende des Dosenhalses (4) bereitstellt, **dadurch gekennzeichnet, dass** beim hergestellten Aerosol-Dosenkörper in der Einwärts-Randbördelung (6) ein Dichtungsring (7) so eingesetzt ist, dass der Dichtungsring (7) von der Einwärts-Randbördelung (6) nur gehalten und vom Inneren des Dosenkörpers (1) her entlang seines ganzen Umfangs zugänglich ist, und die Vorrichtung dazu die folgenden Merkmale umfasst:
eine Ventilsitz-Einrichtung mit Mitteln zum Ausbilden eines zylindrischen Bereichs beim Dosenhals (4) mit einem verengten innerer Sitz (6a) am Dosenmantel (3), zum Einführen eines Dichtungsrings (7) in diesen Sitz und zum Umformen des freien Endes des Dosenmantels (3) radial nach innen etwas um den Dichtungsring (7) herum.

## Claims

1. An aerosol can body (1) comprising a can shell (3) closed about a can axis (2), a constricted can neck (4) and a valve seat (5) having an inward curl (6) at the free end of said can neck (4), **characterised in that** said valve seat (5) comprises a sealing ring (7) inserted into said inward curl (6), wherein said sealing ring (7) is only held by said inward curl (6) and is accessible along its entire circumference from the interior of the can body (1).

2. Aerosol can body (1) according to claim 1, **characterised in that** said inward curl (6), in a section plane that comprises said can axis (2), is C-shaped open towards the interior of the can body (1), the cross-section of said sealing ring (7) being adapted to the inner shape of said inward curl (6).

3. Aerosol can body (1) according to claim 1 or 2, **characterised in that** said can shell (3) is formed by a radial expanding pressing step at a second inner mould (24), wherein said valve seat (5), during pressing into said second inner mould (24), is only held and is not expanded.

4. Aerosol can body (1) according to any of claims 1 to 3, **characterised in that** a connection cup (8) with a valve (11) is crimped to the valve seat (5), said inward curl (6) and said sealing ring (7) being partially encompassed by a connection cup's flared lap (8a), and an annular closed surface of contact (7a) is formed between said connection cup's flared lap (8a) and said sealing ring (7), which comprises at least one annular closed inner partial surface (7b) in a region starting from the smallest opening diameter of said sealing ring (7) towards the interior of the can.

5. Aerosol can body (1) according to any of claims 1 to 4, **characterised in that** said can shell (3) and said connection cup (8) comprise a layer of metal, preferably of sheet iron, and an inner layer of plastic material is arranged on the inner sides of said can shell (3) and said connection cup (8), and the layer of plastic material of said can shell (3) and of said connection cup (8) extend up to the sealing ring (7) so that a continuous inner coating is ensured even in the region of connection between said can shell (3) and said connection cup (8), the sealing ring (7) optionally comprising a fusion or seal joint to at least one adjacent layer of plastic material.

6. Aerosol can body (1) according to claim 5, **characterised in that** said layer of metal of said can shell (3) is closed in circumferential direction by a butted longitudinal laser seam, and said layer of plastic material is formed by an inner foil (3b) of plastic material at the inner side of said can shell (3).

7. Aerosol can body (1) according to any of claims 1 to 6, **characterised in that** a can bottom (13) is welded to the lower end of said can shell (3), opposite to said valve seat (5), by a laser connection, particularly by a circumferential seam (14) or by a plurality of narrowly delimited connection points (38), while plastic material (15) is arranged in the can's interior along the entire annular laser connection, which is sealingly connected to the can bottom (13) and the can shell (3), wherein the lower end region of said can shell (3) engages tightly the contact region (13a) of said can bottom (13), being in vertical section shoulder-shaped, and wherein the circumferential front surface (13b) of said can bottom (13) is situated in the can's interior or on the inner side of said can shell (3), whereas the lower front surface (3b) of said can shell (3) is outside the can bottom (13).

8. Aerosol can body (1) according to any of claims 1 to 6, **characterised in that** said valve seat (5) is formed at an upper closing part (33), wherein said upper closing part (33) is attached to said can shell (3) by a laser connection, optionally by a circumferential seam (14), but preferably by a plurality of narrowly delimited connection points (38) formed by a laser beam, while at the inner side plastic material (7a) is arranged at the laser connection, which ensures a sealed connection to the inner foild (3b) of said can shell (3) and to said sealing ring 7.

9. A process for producing an aerosol can body comprising an can shell (3) closed about a can axis (2) and a valve seat (5), said process preparing a constricted can neck (4) at one front side of the can body (1) and comprising a curling step for forming an inward curl (6) at the free end of said can neck (4), **characterised in that** a sealing ring (7) is inserted into said inward curl (6), said sealing ring (7) being only held by said inward curl (6) and being accessible along its entire circumference from the interior of the can body (1).

10. Process according to claim 9, **characterised in that** a cylindrical region with a constricted inner seat (6a) for said sealing ring (7) is prepared at its constricted end during the formation of said can neck (4), said sealing ring (7) is inserted through the cylindrical region to the seat (6a), and the free end of said can neck (4) is radial inwards deformed somewhat around the sealing ring (7).

11. Process according to claim 9 or 10, **characterised in that** while producing said can shell (3), a metal sheet is closed in circumferential direction of said can shell (3) with a butted longitudinal laser seam to form a cylindrical can shell (3) and, together with a cylinder-shell-shaped inner foil (28) and/or an outer foil (30) is arranged on e first pressing mandrel (27), the first pressing mandrel (27) together with the metallic can shell (3) put on it and the at least one foil (28, 30) arranged on it of said can shell (3) is expanded radial to outside in the interior of a cylindrical first inner mould (26), so that the circumferences of all layers of said can shell (3) are somewhat enlarged, that the at least one foil (28, 30) comprises a sealing layer facing the metallic layer for achieving a durable connection between the at least one foil (28, 30) and the metallic can shell (3), and in a sealing step supplying heat and pressing, a sealing connection is formed of the at least one foil (28, 30) to the metallic layer of said can shell (3).

12. Process according to claim 11, **characterised in that** said can neck (4) with the valve seat (5) is either formed at a free end of said cylindrical can shell (3), wherein said can shell (3), during constriction, is turned around the can axis (2), a constriction tool (21) is pressed from outside against the can wall and is moved in the direction of said can axis (2), or that the valve seat (5) is formed at an upper closing part (33), wherein said upper closing part (33) is attached to said can shell (3) by a laser connection, optionally by a circumferential seam (14), but preferably by a plurality of narrowly delimited connection points (38) formed by a laser beam, while at the inner side, at the laser connection, plastic material (7a) is arranged, which ensures a sealed connection to an inner foil (3b) of said can shell (3) and to said sealing ring 7.

13. Process according to any of claims 9 to 12, **characterised in that** said can shell (3) is formed by a second radial expanding pressing step at a second inner mould (24), wherein said valve seat (5), during pressing in the second inner mould (24) is only held and is not expanded.

14. Process according to any of claims 9 to 13, **characterised in that** a can bottom (13) is inserted into the interior of said can shell (3) at the lower end of said can shell (3), the end region of said can shell (3) is tightly pressed against the, in cross-section shoulder-shaped, region of contact (13a) of said can bottom (13), and the can bottom (13), in the shoulder-shaped region of contact (13a) is attached by a laser connection, optionally by a circumferential seam (14), but preferably by a plurality of narrowly delimited connection points (38) formed by a laser beam, wherein plastic material (15) is arranged in the can's interior along the entire annular laser connection, which is sealingly connected to said can bottom (13) and said can shell (3).

15. Device for producing an aerosol can body comprising an can shell (3) closed about a can axis (2) and a valve seat (5), said device preparing a constricted can neck (4) and an inward curl (6) at the free end of said can neck (4), **characterised in that** at the produced aerosol can body, a sealing ring (7) is inserted into said inward curl (6) in a manner that said sealing ring (7) is only held by said inward curl (6) and is accessible along its entire circumference from the interior of the can body (1), and that the device, to this end, comprises the following characteristics:
a valve seat device comprising means for forming a cylindrical zone at the can neck (4) having a constricted inner seat (6a) at the can shell (3) for inserting a sealing ring (7) into this seat, and for deforming the free end of said can shell (3) radial towards the interior somewhat around said sealing ring (7).

## Revendications

1. Corps de boîtier aérosol (1) comprenant une chemise de boîtier (3) fermée autour d'un axe de boîtier (2), un goulot rétréci de boîtier (4) et un siège de soupape (5) ayant un collet rabattu incurvé (6) formé au bout libre du goulot de boîtier (4), **caractérisé en ce, que** le siège de soupape (5) comprend un anneau d'étanchéité (7) inséré dans le collet rabattu incurvé (6), dans lequel l'anneau d'étanchéité (7) est seulement tenu par le collet rabattu incurvé (6) et est accessible à partir de l'intérieur du corps de boîtier (1) le long de toute sa circonférence.

2. Corps de boîtier aérosol (1) selon la revendication 1, **caractérisé en ce, que** le collet rabattu incurvé (6), dans un plan de coupe incluant l'axe de boîtier (2), est formé en forme d'un C, ouvert vers l'intérieur du corps de boîtier (1), la coupe transversale de l'anneau d'étanchéité (7) étant adaptée à la forme intérieure du collet rabattu incurvé (6).

3. Corps de boîtier aérosol (1) selon la revendication 1 ou 2, **caractérisé en ce, que** la chemise de boîtier (3) est formée par une étape de pressage radialement élargissant à une deuxième moule intérieure, dans lequel le siège de soupape (5), pendant le pressage dans la deuxième moule intérieure (24), est seulement tenu et n'est pas élargi.

4. Corps de boîtier aérosol (1) selon une quelconque des revendications 1 à 3, **caractérisé en ce, qu**'une cuvette de connexion (8) avec le soupape (11) est serti crimp au siège de soupape (5), dans lequel le collet rabattu incurvé (6) et l'anneau d'étanchéité (7) sont partiellement enveloppés par un sertissage de cuvette de connexion (8a), et une surface annulaire fermée de contact (7a) est formée entre le sertissage de cuvette de connexion (8a) et l'anneau d'étanchéité (7), qui au moins une surface partielle annulaire fermée interne (7b) dans une zone à partir du diamètre d'ouverture plus petit de l'anneau d' étanchéité (7) vers l'intérieur du boîtier.

5. Corps de boîtier aérosol (1) selon une quelconque des revendications 1 à 4, **caractérisé en ce, que** la chemise de boîtier (3) et la cuvette de connexion (8) comprennent une couche de métal, préférablement une tôle de fer, qu'une couche interne de matière synthétique est disposée aux côtés intérieurs de la chemise de boîtier (3) et de la cuvette de connexion (8), et la couche de matière synthétique de la chemise de boîtier (3) et de la cuvette de connexion (8) s'étendent jusqu'à l'anneau d'étanchéité (7) de manière qu'un revêtement intérieur continu est garantie aussi dans la zone de connexion entre la chemise de boîtier (3) et la cuvette de connexion (8), le cas échéant l'anneau d'étanchéité (7) présentant un joint par fusion ou par scellement à au moins une couche de matière synthétique adjacente.

6. Corps de boîtier aérosol (1) selon la revendication 5, **caractérisé en ce, que** la couche de métal de la chemise de boîtier (3), en direction circonférentielle, est fermée avec un joint laser longitudinal bout à bout, et la couche de matière synthétique est formée au côté intérieur de la chemise de boîtier (3) par une feuille interne (3b) d'une matière synthétique.

7. Corps de boîtier aérosol (1) selon une quelconque des revendications 1 à 6, **caractérisé en ce, qu**'un fond de boîtier (13) au bout inférieur de la chemise de boîtier (3) opposé au siège de soupape (5) est soudé au moyen d'une connexion laser, particulièrement avec une soudure circonférentielle (14) ou avec une multitude de points de connexion étroitement restreintes (38), qu'une matière synthétique (15) est disposée à l'intérieur du boîtier le long de toute la connexion laser annulaire et est reliée au fond de boîtier (13) et à la chemise de boîtier (3) d'une façon étanche, dans lequel la zone inférieure de bout de la chemise de boîtier (3) colle d'une façon étanche à la zone de contact (13a) du fond de boîtier (13), en coupe verticale en forme d'une épaule, et la face circonférentielle (13b) du fond de boîtier (13) est située à l'intérieur du boîtier ou au côté intérieur de la chemise de boîtier, tandis que la face inférieure (3b) de la chemise de boîtier est en dehors du fond de boîtier (13).

8. Corps de boîtier aérosol (1) selon une quelconque des revendications 1 à 6, **caractérisé en ce, que** le siège de soupape (5) est formé à une partie supérieure de fermeture (33), ladite partie supérieure de fermeture (33) étant attachée à la chemise de boîtier (3) par une connexion laser, le cas échéant avec une soudure circonférentielle, mais de préférence avec une multitude de points de connexion étroitement restreintes (38) formés par un rayon laser, et de la matière synthétique (7a) est disposée à l'intérieur chez la connexion laser et garantit une connexion étanche à la feuille interne (3b) de la chemise de boîtier (3) et à l'anneau d'étanchéité 7.

9. Procédé pour la fabrication d'un corps de boîtier aérosol (1) comprenant une chemise de boîtier (3) fermée autour d'un axe de boîtier (2) et un siège de soupape (5), ledit procédé préparant un goulot rétréci de boîtier (4) chez un côté frontal du corps de boîtier est comprenant une étape de sertissage pour former un collet rabattu incurvé (6) au bout libre du goulot de boîtier (4), **caractérisé en ce, qu'**un anneau d'étanchéité est inséré dans le collet rabattu incurvé (6), dans lequel l'anneau d'étanchéité (7) est seulement tenu par le collet rabattu incurvé (6) et est accessible à partir de l'intérieur du corps de boîtier (1) le long de toute sa circonférence.

10. Procédé selon la revendication 9, **caractérisé en ce, que** l'on prépare une zone cylindrique ayant un siège (6a) rétréci intérieur pour l'anneau d'étanchéité lors de la formation du goulot de boîtier (4) au bout rétréci de ceci, on introduit l'anneau d'étanchéité à travers la zone cylindrique vers le siège (6a), et on déforme le bout libre du goulot de boîtier (4) radialement vers l'intérieur sensiblement autour l'anneau d'étanchéité.

11. Procédé selon la revendication 9 ou 10, **caractérisé en ce, qu**'une tôle métallique est fermée en direction circonférentielle de la chemise de boîtier (3) avec un joint laser longitudinal bout à bout lors de la fabrication de la chemise de boîtier (3) à former une chemise de boîtier (3) cylindrique et est disposée conjointement avec une feuille intérieure (28) et/ou une feuille extérieure (30) de forme d'une chemise cylindrique à un premier mandrin de serrage (27), le premier mandrin de serrage (27), avec la chemise métallique de boîtier (3) posée et la au moins une feuille (28,30), disposée sur celle-ci, de la chemise de boîtier (3), est radialement dilaté vers l'extérieur à l'intérieur d'une première moule intérieure cylindrique (26) de manière, que les circonférences de toutes les couches de la chemise de boîtier (3) sont un peu agrandies, que la au moins une feuille (28, 30) comprend une couche de scellement tournée vers la couche métallique pour réaliser une connexion durable entre la au moins une feuille (28, 30) et la chemise métallique de boîtier (3) et une connexion de scellement de la au moins une feuille (28, 30) à la couche métallique de la chemise de boîtier (3) est formée dans une étape de scellement tout en alimentant de chaleur et en pressant.

12. Procédé selon la revendication 11, **caractérisé en ce, que** le goulot de boîtier (4) avec le siège de soupape (5) est formé soit au bout libre de la chemise de boîtier (3) cylindrique par une étape de rétrécissement, dans laquelle la chemise de boîtier (3) est tournée autour de l'axe de boîtier (2) lors du rétrécissement, et un outil de rétrécissement (21) est pressé contre la paroi de boîtier et est mû en direction de l'axe de boîtier (2), soit que le siège de soupape (5) est formé à une partie supérieure de fermeture (33), ladite partie supérieure de fermeture (33) étant attachée à la chemise de boîtier (3) par une connexion laser, le cas échéant avec une soudure circonférentielle, mais de préférence avec une multitude de points de connexion étroitement restreintes (38) formés par un rayon laser, et de la matière synthétique (7a) est disposée à l'intérieur chez la connexion laser et garantit une connexion étanche à la feuille interne (3b) de la chemise de boîtier (3) et à l'anneau d'étanchéité 7.

13. Procédé selon une quelconque des revendications 9 à 12, **caractérisé en ce, que** la chemise de boîtier (3), par une deuxième étape de serrage radialement dilatante, est formée à une deuxième moule intérieure, dans laquelle le siège de soupape (5) est seulement tenu et n'est pas élargi.

14. Procédé selon une quelconque des revendications 9 à 13, **caractérisé en ce, que** l'on introduit un fond de boîtier (13) au bout inférieur de la chemise de boîtier (3) dans l'intérieur de la chemise de boîtier, que l'on presse d'une façon étanche la zone de bout de la chemise de boîtier (3) vers la zone de contact (13a) du fond de boîtier (13), en coupe en forme d'une épaule, et on attache le fond de boîtier (13) dans la zone de contact (13a) en forme d'épaule par une connexion laser annulaire fermée, le cas échéant avec une soudure circonférentielle (14), mais de préférence avec une multitude de points de connexion étroitement restreintes (38) formés par un rayon laser, de la matière synthétique (15) étant disposée à l'intérieur de boîtier le long de toute la connexion laser annulaire et étant attachée d'une façon étanche au fond de boîtier (13) et à la chemise de boîtier (3).

15. Dispositif pour la fabrication d'un corps de boîtier aérosol (1) comprenant une chemise de boîtier (3) fermée autour d'un axe de boîtier (2) et un siège de soupape (5), ledit dispositif préparant un goulot de boîtier (4) rétréci et un collet rabattu incurvé (6) au bout libre du goulot de boîtier (4), **caractérisé en ce, qu**'au corps de boîtier aérosol fabriqué, un anneau d'étanchéité (7) est inséré dans le collet rabattu incurvé (6) d'une manière, que l'anneau d'étanchéité (7) est seulement tenu par le collet rabattu incurvé (6) et est accessible à partir de l'intérieur du corps de boîtier (1) le long de toute sa circonférence, et le dispositif, à cet effet, comprend les caractéristiques suivantes :
un dispositif de siège de soupape ayant des moyens pour former une zone cylindrique au goulot de boîtier (4) avec un siège rétréci interne (6a) à la chemise de boîtier (3) pour insérer un anneau d'étanchéité (7) dans ce siège et pour déformer bout libre de la chemise de boîtier radialement vers l'intérieur environ autour l'anneau d'étanchéité (7).
